(19)

**Europäisches Patentamt**

**European Patent Office**

**Office européen des brevets**

(11) **EP 1 235 210 A1**

(12) **EUROPEAN PATENT APPLICATION**
published in accordance with Art. 158(3) EPC

(43) Date of publication:
28.08.2002 Bulletin 2002/35

(51) Int Cl.⁷: **G11B 7/0045**, G11B 7/005,
G11B 7/125, G11B 7/24

(21) Application number: 00966450.9

(22) Date of filing: 13.10.2000

(86) International application number:
PCT/JP00/07093

(87) International publication number:
WO 01/027917 (19.04.2001 Gazette 2001/16)

(84) Designated Contracting States:
AT BE CH CY DE DK ES FI FR GB GR IE IT LI LU
MC NL PT SE
Designated Extension States:
AL LT LV MK RO SI

(30) Priority: 14.10.1999 JP 29284299
14.10.1999 JP 29284399
14.10.1999 JP 29284499

(71) Applicant: TDK Corporation
Chuo-ku, Tokyo 103-8272 (JP)

(72) Inventors:
• ARIOKA, Hiroyuki c/o TDK Corporation
Chuo-ku, Tokyo 103-8272 (JP)
• SUZAWA, Kazuki c/o TDK Corporation
Chuo-ku, Tokyo 103-8272 (JP)

(74) Representative: Wagner, Karl H., Dipl.-Ing.
Wagner & Geyer,
Patentanwälte,
Gewürzmühlstrasse 5
80538 München (DE)

(54) **OPTICAL RECORDING MEDIUM, OPTICAL RECORDING METHOD, OPTICAL RECORDED MEDIUM REPRODUCING METHOD**

(57) On a recording layer 12 of an optical recording layer 10, virtual recording cells 40 are assumed in a groove 16. Bymodulating an irradiating power of a laser beam on every virtual recording cells 40 corresponding to the information to be recorded in five stages or more, recorded marks 48A - 48G having different sizes and/or optical transmissivities in five stages or more are formed and an optical reflectance of the virtual recording cells 40 as a whole is modulated in multilevel. Thus, the reflectance level of the whole of the virtual recording cells 40 which includes the outside of the recorded marks by a readout laser beam on reproducing is varied in five stages or more.

Fig.1

EP 1 235 210 A1

**Description**

TECHNICAL FIELD

This invention relates to an optical recording medium, an optical recording method for irradiating a laser beam to an optical recording medium with irradiating power changed in multiple stages based on data provided to record, forming recorded marks corresponding to the irradiating power and performing a multilevel recording of the data and an optical reading-out method for reading-out the data.

BACKGROUND ART

In a method for recording data on a conventional optical recording medium, the data is recorded by changing a length of a recorded mark (a length of modulated portion of a reflected signal) in multiple stages. In contrast, a large number of studies for a method for recording plurality pieces of data in a region of a same length by switching a depth of a recorded mark (a modulation rate of a reflected signal) in multiple stages are developed.

In such a recording method, since plurality pieces of data can be recorded in a direction of depth, an amount of signals assigned on a fixed length can be increased compared with recording binary data simply by a presence of a pit or not. Thus, linear recording density can be improved. As such an optical recording method, optical recording methods such as a method by utilizing a holograph and a method of using by multilayered recording layer have been proposed.

Hereinafter, a data recording in multiple stages by using a depth variation of reflectance, for example, is referred to as a "multilevel recording".

In such a multilevel recording, the recorded mark must be shortened for improving a recording density.

However, the multilevel recording becomes difficult if it is intended that the recorded mark is smaller than a beam diameter of a condensed laser beam used for recording or reading out.

For example, adjusting a light amount of laser for recording in multiple stages is described in Japanese Laid Open Patent Publication No. 10-134353. In this description, if a recording medium is made of a dye layer or a phase change layer, a reproducing signal is formed based on a difference in reflection between a recorded portion and an unrecorded portion. Thus, a method described in Japanese Laid Open Patent Publication No. 10-134353 is not suitable for recording in multiple stages because a relation between an unrecorded stage and a recorded stage corresponds to a relation between a presence of record and an absence of record, respectively. More specifically, there is no intermediate condition between recorded condition and unrecorded condition in the dye layer or the phase change layer.

As disclosed in Japanese Laid Open Patent Publication No. 1-182846, there is an optical recording medium which a light absorbance of a reactant in a recording layer is change in a digital quantity when an amount of an incident light on a recording layer is given as a digital quantity.

However, in this type of optical recording medium it is supposed that an absolute value of the change in the light absorbance corresponding to an amount of a laser irradiation (a number of irradiating times) is very small, and this type of optical recording medium has not been in practical use yet.

Further, as disclosed in Japanese Laid Open Patent Publication No. 61-211835, there is an optical recording method which records in optional stages different each other of a color development density by changing an intensity of an irradiating light or a number of irradiating times on to photochromic material.

However, in this method, there is a problem that five stages or more of a color development density cannot be read out on reading out by irradiating a laser light.

DISCLOSURE OF THE INVENTION

The inventor found a method capable of the multilevel recording of five stages or more by changing irradiating power of a laser even if under the condition that the length of a recorded mark is shorter than the diameter of the condensed beam. Further, the inventor found the dye material which changes gently from unrecorded condition to recorded condition by irradiating of the laser thereby increasing temperature is more suitable for the material of the recording layer than the phase change material which changes steeply.

The object of the invention is to provide an optical recording medium and an optical recording method capable of multilevel recording in multiple stages by using an optical recording medium such as a CD-R generally widely used in practice and obtaining a good signal quality.

The inventor has studied wholeheartedly of an optical recordingmedium, found a recording method for modulating an optical reflectance of a virtual recording region of fixed area, which includes a high reflectance region surrounding the recorded mark, in multiple stages, and confirmed to be able to perform a multilevel recording on the optical medium in high density of five stages or more. Thus, the object can be attained by the present invention as follows:

(1) An optical recordingmediumhaving an organic dye recording layer, wherein the data to be recorded in multilevel recorded by changing a laser beam power into more than five stages and radiating the laser beam to the optical recording medium.

(2) An optical recordingmediumhaving an organic dye recording layer, wherein the optical recording medium is multilevel-recorded in a depth direction of the organic dye recording layer.

(3) An optical recording medium according to (2), the optical recordingmediumhas plural pits having different depths in advance.

(4) An optical recording medium according to (2) or (3), the optical recording medium has plural pits having the depth with numbers in accordance with the number of stages of a laser beam radiating power.

(5) An optical recording medium capable of recording information by irradiating a recording layer with a laser beam and forming recorded marks thereon and of reading out the recorded information by irradiating the recorded marks with a readout laser beam, characterized in that said recording layer has virtual recording cells defined an optionally selective unit length in a relative moving direction of said laser beam and said recording layer, and a unit width orthogonal to said moving direction, and continuously set along said moving direction, said recording layer of said cells being capable of forming said recorded marks which have differences each other in at least one of a size and an optical transmissivity corresponding to modulation of five stages or more of an irradiating power of said laser beam, and thereby said optical recording medium can be achieved a recording of the information in a multilevel format of five stages or more by modulating an optical reflectance of the whole of said virtual recording cells based on at least one of an area ratio of said recorded marks to said virtual recording cells and the optical transmissivity of said recorded marks.

(6) An optical recording medium according to (5), wherein said unit length of said virtual recording cell is set to be approximately equal to a length of said recorded mark formed by irradiating of said laser beam with a maximum irradiating power.

(7) An optical recording medium according to (5) or (6), wherein a groove for guiding said laser beam is provided along said recording layer, said virtual recording cells being mainly set in said groove, and said unit width being equal to a distance between center positions in a width direction of each of a land sandwiched by the adjacent grooves and an adjacent land.

(8) An optical recording medium according to any one of (5) to (7), wherein said unit length of said virtual recording cell is equal to a diameter or less of a beam waist of said readout laser beam.

(9) An optical recording medium according to any one of (1) to (8), wherein said medium has previously recorded information in a multilevel manner on a portion of said recording layer.

(10) An optical recording medium according to (3), (4), or (9) wherein the plural pits and/or a multilevel-recorded portion have or has a specific information and the specific information represents that the optical recording medium is medium for a multilevel-recording.

(11) An optical recording medium according to any one of (5) to (8), wherein saidmediumhas recorded specific in formation which indicates the medium being a multilevel recording medium on at least one of said virtual recording cell and the multilevel recorded portion.

(12) An optical recording medium according to any one of (1) to (11), wherein a groove for guiding said laser beam is provided along said recording layer and intermitted on its way.

(13) An optical recording medium according to any one of (1) to (12), wherein that said recording layer is formed with an organic dye.

(14) An optical recording medium having a recording layer on a light transmitting substrate, wherein the recording layer formed of an organic dye and capable of forming recorded marks in which when multilevel recording is to be carried out by irradiation of a laser beam through switching of irradiating power of the laser beam in five stages or more depending on data to be recorded, a relationship ($T = P_1/P_2$) between a duty ratio ($P_1$) of maximum irradiating power and a duty ratio ($P_2$) of minimum irradiating power in the laser beam satisfies an equation $0.5 < T < 0.9$.

(15) An optical recording medium according to (5), wherein the recording layer of said virtual recording cells is capable of forming said recorded marks which have differences each other corresponding to an irradiating power of said laser beam under a condition that satisfies, $0.05 < ES/EL < 0.5$, a ratio of a maximum irradiating power EL and a minimum irradiating power ES of a power which is a product of said irradiating power of five stages or more in a unit irradiating time for the virtual recording cells.

(16) An optical recording medium according to (5), wherein the virtual recording cell is set to have a property of

$$1.8 < (B-A)/A < 11$$

where irradiating power of the laser beam, which is a product of irradiating power required for changing a 20 % of a whole changing range as 100 % of a reflectance changing range being X/100-Y/100 defined with an initial reflectance X % of said virtual recording cell without irradiation of said laser beam and a limited minimum reflectance Y % with irradiation of said laser beam, from said initial reflectance X % by irradiating of said laser beam is A, and irradiating power of the laser beam, which is a product of irradiating power required for changing a 80 % of said reflectance changing range being X/100-Y/100 with irradiation of said laser beam, from said initial reflectance X % by irradiating of said laser beam is B, and thereby said optical recording medium can be achieved a recording of the information in a multilevel format of five stages or more by modulating an optical reflectance of the whole of said virtual recording cells based on at least one of an area ratio of said recorded marks to said virtual recording cells and the optical transmissivity of said recorded marks.

(17) An optical recording medium according to (16), wherein said medium has a plurality of recorded marks of different sizes formed by a multilevel recording with changing said irradiating power of said laser beam for five stages or more, and includes a recorded mark has a length of the diameter or less of a condensed beam waist of said readout laser in at least a part of said recorded marks.

(18) An optical recording medium according to (16), wherein said recording layer of said medium includes an organic dye.

(19) An optical recording medium according to (16), wherein said virtual recording cell has 60 % or more of said initial reflectance before recording, and 40 % or less of said limited minimum reflectance Y after recording.

(20) An optical recording method for recording information by irradiating a recording layer with a laser beam while moving one of the recording layer and the laser beam relative to another in a fixed direction and forming recorded marks on said recording layer, wherein by comprising the steps of assuming virtual recording cells on said recording layer continuously along said moving direction, changing sizes of said recorded marks formed in said virtual recording cells by way of modulating an irradiating power of said laser beam in five stages or more on each of said virtual recording cells, and modulating an optical reflectance of the whole of said virtual recording cells based on at least one of an area ratio of said recorded marks to said virtual recording cells and the optical transmissivity of said recorded marks corresponding to an irradiating power of said laser beam, so as to record the information in a multilevel format of five stages or more.

(21) An optical recording method according to (20), wherein said recording layer is of a material that at least one of a size and an optical transmissivity is modulated only by an irradiating power when a beam diameter of said laser beam is constant, and irradiated with said laser beam with a constant diameter of said laser beam.

(22) An optical reading-out method, wherein the data to be recorded is multilevel recorded by changing a laser beam power into more than five stages and radiating the laser beam to an optical recording medium having an organic dye recording layer with plural pits having different depths in advance at least one of the plural pits and a multilevel-recorded portion of the optical recording medium have or has a specific information and being capable to read-out the specific information upon at least one of reading-out and recording the present optical recording medium.

(23) An optical recording-out method according to (22), wherein the plural pits have the depth with numbers in accordance with the number of stages of a laser beam irradiating power.

(24) An optical reading-out method according to claim (22), identifying the present recording mediums individually or identifying the present recording medium as an optical recording medium for a multilevel-recording by the specific information.

(25) An optical reading-out method, wherein plural pits having different depths are formed on an optical recording medium having an organic dye recording layer and/or a multilevel-recording is performed on the optical recording medium having an organic dye recording layer in advance and the number of the laser beam power is determined in response to the number of the pits recorded therein in advance.

(26) An optical recording method in which when multilevel recording is to be carried out by irradiation of a laser beam on an optical recording medium having a recording layer on a light transmitting substrate through switching of irradiating power of the laser beam in five stages or more depending on data to be recorded, a relationship ($T = P_1/P_2$) between a duty ratio ($P_1$) of maximum irradiating power and a duty ratio ($P_2$) of minimum irradiating power in the laser beam satisfies an equation $0.5 < T < 0.9$.

(27) An optical recording method in which when multilevel recording is to be carried out by irradiating of a laser beam on an optical recording medium having a recording layer on a light transmitting substrate through switching of irradiating power of the laser beam in five stages or more depending on data to be recorded, a relationship between laser beam irradiation power (A) having a change in a reflectance of $0.2 \times V$ and laser beam irradiating power (B) having a change in a reflectance of $0.8 \times V$ satisfies an equation, $(B - A) / B > 0.15$, and a maximum change range of the reflectance based on the laser beam irradiating in a recording portion is represented by V.

(28) An optical recording method according to (20), wherein further comprising the steps of modulating an irradiating power of said laser beam in five stages or more in a unit irradiating time for each of said virtual recording cells and irradiating said laser beam under a condition that satisfies, $0.05 < ES/EL < 0.5$, a ratio of a maximum irradiating power EL and a minimum irradiating power ES, and forming recorded marks modulated an optical reflectance of the whole of said virtual recording cells in at least one of sizes and the optical transmissivity of said recorded marks corresponding to an irradiating power of said laser beam.

(29) An optical recording method according to (28), wherein said plurality of recorded marks of different sizes formed by irradiating said laser beam includes a recorded mark has a length of the diameter or less of a condensed beam of a readout laser in said recorded marks.

In the present invention, by changing the laser beam power into more than five stages and radiating the laser beam to the optical recording medium having the organic dye recording layer, it becomes possible to perform the multilevel-record. Further, forming several kinds of pit rows having different depths in advance, or performing the multilevel-record in advance, the specified information in the portion is identified so that it can be found that the optical recording medium comprises the present optical recording medium and the information with regard to the amount of the laser beam for recording and reproducing the present optical recording medium is capable of being read upon reproducing the present optical recording medium.

Further, in this invention, since the virtual recording cell is assumed on the recording layer and optical reflectance of the whole of the virtual recording cell is read out, the reflectance can be controlled in multiple stages by adjusting the irradiating power of the recording laser in multiple stages even if the size of the recorded mark is smaller than the diameter of the recording beam. Namely, at least one of a size and an optical transmissivity is modulated by modulating an irradiating power of the laser under the condition that the cell which is the object of reading out is fixed, and thereby the recording in amultilevel format by varying an optical reflectance of the whole of the fixed region (virtual cell) which includes the recorded mark and the unrecorded portion can be achieved.

Furthermore, this effect was remarkable when the multilevel recording of five stages or more.

In other words, up to approximately four stages even the ordinary method of modulating the length of the recorded mark can record in multilevel format. However, it is very important to control the optical reflectance of the whole of the virtual cell for performing the high density multilevel recording in five stages or more.

This recording method is useful especially for the optical recording medium having the recording layer using an organic dye.

In the present invention, in the case of the optical recording medium in which a reflectance is reduced by the irradiation of a laser beam, first of all, a reflectance in a state obtained before recording is represented by Ri and a reflectance in a portion where a recording part is altered through laser beam irradiation and the reflectance is completely reduced is represented by Rp, and a change range (Ri - Rp) of a maximum reflectance which is varied with a change from an unrecording state to a recording state is defined as a maximum change range V of the reflectance. It has been found that advantages can be obtained with (B - A) / B which is greater than 0.15, wherein irradiation power of a laser beam having a change in the reflectance of 0.2 X V through the irradiation of the laser beam is represented by (A) and irradiation power of a laser beam having a change in the reflectance of 0.8 X V is represented by (B). Furthermore, the optical recording system is particularly effective in multilevel recording in which the laser beam irradiation power is switched in five or more stages. The unit of the irradiation power of the laser beam is indicated as mW, and is preferably 2 to 30 mW which is varied depending on a linear velocity for the recording, more preferably 4 to 14 mW.

The relationship between the irradiation power of the laser beam and the reflectance can be obtained by carrying out the recording on the optical recording medium to be used through a variety of laser beam irradiation power and measuring a reflectance.

At this time, for setting the value in the equation (4) to be greater than 0.15, it is necessary to regulate the speed of the change of the recording layer through the laser beam irradiation. In other words, in the case in which a dye is used for the recording layer, the recording sensitivity of the organic dye recording layer absorbing the laser beam is important. Therefore, it is necessary to select an organic dye in full consideration. If an organic dye having a too high sensitivity, light is rapidly absorbed even if the laser beam irradiation power is changed. Therefore, the laser beam irradiation power (A) is close to the laser beam irradiation power (B), which is not preferable. To the contrary, if the sensitivity is too low, the jitter value is increased too much, which is not preferable. As another method for setting the value in the equation (4) to be greater than 0.15, it is also supposed that the organic dye recording layer has a multiplayer structure to contain an organic dye having different recording densities for each layer. In this case, it is preferable that an organic dye having a high recording sensitivity should be used for the organic dye recording layer closer to the laser beam irradiation and an organic dye having a low recording sensitivity should be used for the organic dye recording layer closer to the reflecting layer.

Further, in this invention, since the virtual recording cell is assumed on the recording layer and optical reflectance of the whole of the virtual recording cell is read out, the reflectance can be controlled in multiple stages by adjusting the irradiating power of the recording laser in multiple stages even if the size of the recorded mark is smaller than the diameter of the recording beam. Namely, at least one of a size and an optical transmissivity is modulated by modulating an irradiating power of the laser under the condition that the cell which is the object of reading out is fixed, and thereby the recording in a multilevel format by varying an optical reflectance of the whole of the fixed region (virtual cell) which includes the recorded mark and the unrecorded portion can be achieved.

Furthermore, this effect was remarkable when the multilevel recording of five stages or more.

In other words, up to approximately four stages even the ordinary method of modulating the length of the recorded mark can record in multilevel format. However, it is very important to control the optical reflectance of the whole of the virtual cell for performing the high density multilevel recording in five stages or more.

In connection with the optical recording medium in particular, paying attention to the irradiating power of the laser beam and the variation of the reflectance it is proved that degrading of a signal on the multilevel recording is remarkable reduced within the range defined by the expression shown in the equation (2).

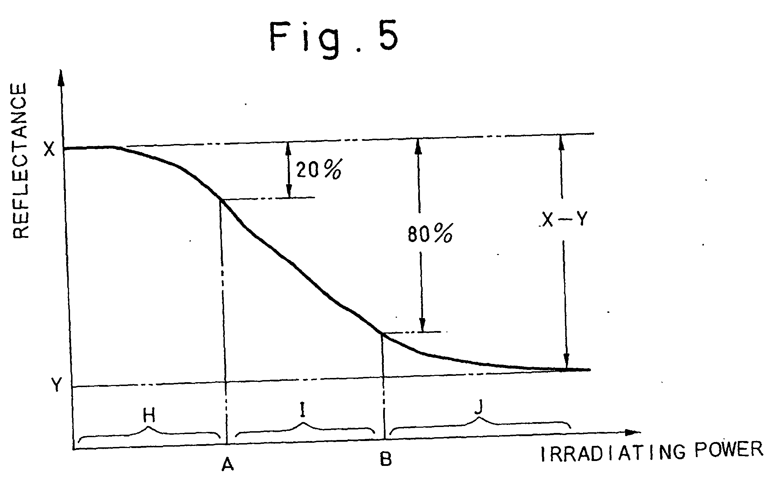

According to the analysis of the inventor, as shown schematically in Fig. 5, the variation of the reflectance is not perfectly in proportion to the product of the irradiating power of the laser beam. As shown in Fig. 5, it is found out that the entire variation of the reflectance is as follows: the reflectance begins with initial reflectance X % at first; the reflectance variation is small in an initial irradiating power region H until the reflectance is reached up to 20 % of the variation range P of the reflectance; the reflectance variation is relatively large in an intermediate irradiating power region I until the reflectance is reached up to 80 % of the variation range of the reflectance; the reflectance variation becomes small in a irradiating recording power region J; and the reflectance results in limited minimum reflectance Y % at last.

From this properties, it is 'expected by the inventor that a relation of a irradiating power A required for getting out of the initial irradiating power region H and a irradiating power B required for getting out of the intermediate irradiating power region I thereafter is an important factor in multilevel recording. Because the reflectance must be set and recorded in multiple stages between the initial reflectance X % and the limited minimum reflectance Y % in multilevel recording and the intermediate irradiating power region I must be utilized effectively. The balance of the irradiating power A and the irradiating power B has a great significance.

In practice, in the analysis of the inventor, although the multilevel recording of five stages or more can be performed within the range defined by the expression shown in the equation (2), it is confirmed that the multilevel recording is obstructed out of the range, such as too large (10 or more) or too small (1.8 or less). In this expression shown in the equation (2), if (B-A)/A is 1.8 or less, it is considered that the variation of the reflectance by the irradiating power becomes steep and therefore the suitable irradiating power cannot be set. If (B-A)/A is 11 or more, it is considered that the variation of the reflectance by the irradiating power becomes too small and therefore the suitable irradiating power cannot be set. Both of the optical recording mediums of these examples are out of balance of the initial irradiating power and the intermediate irradiating power B, and are not suitable for multilevel recording.

For satisfying this condition, material of the recording layer, a layer thickness of the recording layer, material of the reflective layer, material and thickness of a substrate, a shape of a groove engraved on the substrate for laser guide, and so forth are set appropriately.

Within the range defined by the expression shown in the equation (2), $2 \leqq (B-A)/A \leqq 9$ is preferred, in particular.

If the optical recording medium set within the range as stated above is utilized, the recorded mark which has the smaller size than the condensed beam waist of the readout laser (supposed to be impossible in conventional) can be included and degrading of the signal is remarkably reduced. When irradiating the laser beam, the optical reflectance of the whole of the virtual recording cell is modulated by controlling the laser beam power. Since only the light beyond the threshold value corresponding to the fixed intensity of laser beam generally representing the Gaussian distribution can form the recorded mark and the "irradiating power of laser beam" is switched to five stages or more for each unit virtual recording cell, the light range more than the threshold value of the laser beam is controlled, the size and the optical transmissivity of the recorded mark are modulated. Since the optical reflectance of a region, which includes the recorded mark and the unrecorded region surrounding the recorded mark, is modulated in multiple stage on each virtual recording cell, the optical reflectance of the whole of the virtual recording cell can be modulated even the recorded mark which is smaller than the condensed beam waist in size. Resulted from factors described hereinbefore, by using the recordingmediumof the present invention, the optical recording medium having an extremely high recording available density over five stages and including the mark smaller than the condensed beam waist can be obtained.

In the invention described above, it is preferable that the recording layer of the optical recording medium is constituted by including an organic dye constituent. In practice, by way of using the method of making the recorded mark with a reaction of the organic dye constituent, the multilevel recording described above is achieved by the inventor.

In the above-described invention, it is preferable that the initial reflectance X of the virtual recording cell before recording is 60 % or more, and the limited minimum reflectance Y after recording is 40 % or less. Thus, the variation range of the reflectance can be secured sufficiently and therefore the recorded mark can be multiplied in further stages.

Further, the present inventor has vigorously investigated a multilevel recording method using an optical recording medium having an organic dye recording layer. As a result, the present inventor has found a recording method capable of carrying out multilevel recording having an almost uniform recording mark area of a portion having great irradiating power of the laser beam during recording which is not inferior to that of a portion having small irradiating power of the laser beam during the recording when the irradiating power of the laser beam is varied in five or more stages during the recording to carry out the multilevel recording. This is achieved by controlling a duty ratio in irradiating power of the laser beam during the recording.

The duty ratio represents a ratio of an irradiating power of a laser beam required for irradiating the laser beam to a unit recording time of a pit formed by recording. For example, in the case in which a pit having a depth of 10 is to be formed in a depth direction by outputting a recording signal having a length of 7, a duty ratio of 70 % is obtained. At this time, if the recording is carried out on the recording layer with a duty ratio of 100 %, the length of the pit is greater than 10.

In the present invention, a signal varied depending on data to be recorded is sent from a modulation signal generator to a light modulator as a modulation signal having the contents in which an irradiating power of a laser beam is changed in five or more stages, and the laser beam having the irradiating power changed in five or more stages through the light modulator is irradiated on the optical recording medium, thereby carrying out recording. Thus, information having five or more stages in a depth direction is recorded on a recording portion having a constant length. Consequently, the quantity of reflected light of the laser beam to be irradiated during reproduction can also be changed in five or more stages.

However, if the irradiating power of the laser beam to be irradiated is much more increased than that for formation of a shallow recording mark in order to form a deep recording mark, a recording mark area is enlarged. To the contrary, if the irradiating power of the laser beam is reduced, recording cannot be carried out with a sufficient depth. In consideration of this matter, the duty ratio of the laser beam to be irradiated is investigated for maximum irradiating power and minimum irradiating power, that is, the formation of a deep recording mark and the formation of a shallow recording mark. Consequently, the above-mentioned equation (1) can be obtained.

In the equation, it is supposed that the duty ratio of the maximum irradiating power is too great or that of the minimum irradiating power is too small with 0.9 or more. In the former case, information is not normally reproduced due to a deterioration in a recording signal caused by the spread of the recording mark area. In the latter case, recording is not sufficiently carried out in the depth direction so that information is not normally reproduced. Moreover, it is supposed that the duty ratio of the maximum irradiating power is too small or that of the minimum irradiating power is too great with 0.5 or less. In the former case, recording is not sufficiently carried out in the depth direction so that information is not normally reproduced. In the latter case, information is not normally reproduced due to a deterioration in a recording signal caused by the spread of the recording mark area.

However, it founds that there is a case that the recorded mark cannot be read out reliably, only by forming the recorded mark simply with the modulation of the irradiating power. As a result of further analysis the inventor found that the readout accuracy is remarkably increased when the ratio of the maximum recording power and the minimum recording power is set within the range defined by the expression shown in the equation (2). The minimum irradiating power corresponds to the time duration required for obtaining the highest reflectance of the reflectance set in five stages or more, and the maximum irradiating power corresponds to the time duration required for obtaining the lowest reflectance.

For example, if the irradiating power of the recording laser beam is increased extremely for forming the recordedmark remarkably decreasing the reflectance of the virtual recording cell, the recorded mark area is extended too large compared with forming of the recorded mark and a signal quality is degraded. On the contrary, if the irradiating power of the recording laser beam is decreased extremely for forming the virtual recording cell with the high reflectance, the recorded mark cannot be record in sufficiently depth.

For performing the multilevel recording in five stages or more, a suitable irradiating power range (from the minimum irradiating power to the maximum irradiating power) is required. Considering this, a kind of restriction is put on the irradiation recording power by setting the ratio of the maximum irradiating power and the minimum irradiating power within the range defined by the expression shown in (3), and the irradiating power is prevented from too large and too small. Namely, it is intended that the condition to be considered is added for the minimum reflectance and the maximum reflectance of the virtual recording medium, and the recording accuracy is improved.

In the equation (3), if the ratio is 0.05 or less, the resultant that the maximum irradiating power is too large or the minimum irradiating power is too small can be easily extracted. In the former case, a reproduction of information does not performed normally caused by degrading the signal quality of (the recorded mark of) the virtual recording cell having a low reflectance, and in the latter case, the reproduction of information does not performed normally caused by insufficiently recording of (the recorded mark of) the virtual recording cell having a high reflectance.

Further, in the equation (3), if the ratio is 0.5 or more, the resultant that the maximum irradiating power is too small or the minimum irradiating power is too large can be easily extracted. In the former case, a reproduction of information does not performed normally caused by insufficiently recording of (the recorded mark of) the virtual recording cell having a low reflectance, and in the latter case, the reproduction of information does not performed normally caused by degrading the signal quality of (the recorded mark of) the virtual recording cell having a low reflectance.

Therefore, the recording power can be set (adjust) very rationally by using the equation (3).

According to the optical recording method of the present invention described above, the signal property can be improved in multilevel recording, and since the irradiating power is varied, thereby the recorded mark can be reduced. Specifically, it is preferable that the recorded mark having the length shorter than the diameter of the condensed beam of the readout laser is included in the part of the recorded marks formed with switching the irradiating power of the laser beam in five stages or more. Thus, the recording density can be improved extremely in comparison with a prior art.

In the range of above equation (3), it is especially preferred to setting 0.04 < ES/EL < 0.6 especially, moreover 0.05 < ES/EL <0.5 is desirable. The ratio of the expression is varies depending on the property of the recording medium. The ratio of the equation (3) may be different by the difference of the irradiating time of the laser beam even if the same recording medium. Therefore, it is preferable that the above equation (3) is satisfied on considering the property of the recording medium and the power of the laser beam.

For example, paying attention to the property of the recording medium, when the recorded mark is formed on each virtual recording cell so as to provide the reflectance in five stages or more, the virtual recording cell having the maximum reflectance and the virtual recording cell having the minimum reflectance are present in them. The irradiating power by the laser irradiation corresponding to the virtual recording cell of the maximum reflectance is the smallest and the irradiating power by the laser irradiation corresponding to the virtual recording cell of the minimum reflectance is the largest. If the medium which the reflectance variation (decreasing) corresponding to the irradiating power is large, i.e., the medium which can be recorded easily in a short duration, is used for the recording layer, the value of the above expression becomes large, resulted from being closed up the maximum irradiating power and the minimum irradiating power. The recording medium, which the value of the above expression becomes 0.5 or more, is not suitable for the multivalued recording medium because either controlling the reflectance by the irradiating power becomes difficult or the recorded mark becomes too large.

On the contrary, if the medium, which the reflectance variation (decreasing) corresponding to the irradiating power is small, is used, the value of the equation (3) becomes small. The recording medium, which the value of the equation (3) becomes 0.05 or less, is not suitable for the multivalued recording medium because the microscopic recorded mark which is difficult to detect data may be included in a high probability.

As a result, the optical recording method of the present invention includes a meaning of "selecting of the optical recording medium". This is because of a necessity of compatibility of the recording medium and the recording method so as to satisfy the equation (3), and the effect of the invention is advanced by establishing the compatibility and the data detecting accuracy is improved.

Further, the optical recording medium is capable to record by use the optical recording method of the present invention. The optical recording medium has characteristic suitable for a multilevel-recording and is able to attain the above object. It is preferable the recording layer to include an organic dye and the inventor confirmed that it was possible to perform a multi-level-recording more than five stages to the recording layer.

BRIEF DESCRIPTION OF THE DRAWINGS

Fig. 1 is a perspective view including a partially sectional view of a part of an optical recording medium of an embodiment according to the present invention,

Fig. 2 is a block diagram of an optical recording apparatus for recording information by using a laser beam;

Fig. 3 is a schematic view of the relation of a recorded mark, a virtual recording cell and an optical reflectance of them when forming the recorded mark on a recording layer by the optical recording apparatus shown in Fig. 2;

Fig.4 is a schematic perspective view of using another shape of laser beam irradiated the virtual recording cell; and

Fig.5 is a schematic view showing a variation of the reflectance of the optical recording medium according to the present invention.

BEST MODE FOR CARRYING OUT THE INVENTION

Referring to the accompanying drawings, embodiments of the invention now will be described in detail, hereinafter.

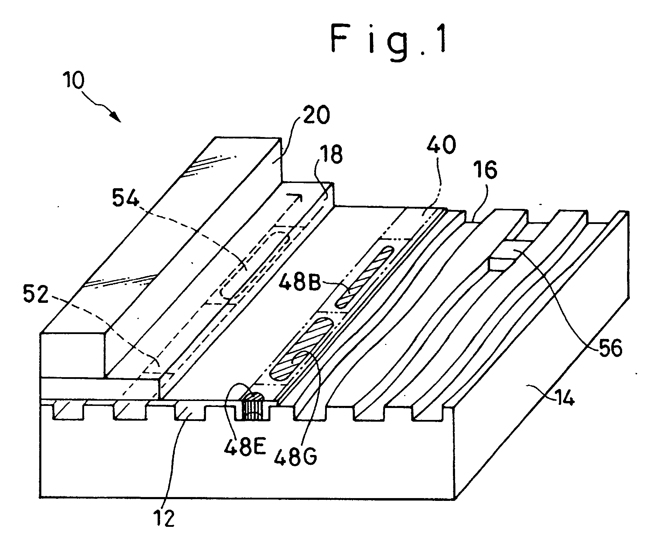

Referring to Fig. 1, an optical recording medium 10 according to an embodiment of the present invention is a CD-R using a dye for a recording layer 12. The optical recording medium 10 comprises a substrate 14 consisting of a transparent base material, the recording layer 12 consisting of a dye coated over a groove 16 for guiding laser beam, the groove 16 being formed on one surface (upper surface in Fig. 1) of the substrate 14, a reflection layer 18 consisting of gold, silver or the like formed by spattering, for example, on the upper surface of the recording layer 12, and a protection layer 20 covering an outside of the reflection layer 18.

A light transmitting substrate applicable to the present invention can be selected arbitrarily among various materials, which are used in the conventional optical recording mediums. For example, polycarbonate resin, polyethylene methacrylate resin, epoxy resin, amorphous polyolefin resin and polyester resin or the like are applicable. However, in view of moisture resistance, measurement stability and cost, polycarbonate resin is preferable. It is preferable that a tracking groove or an irregularity (a pre-groove and a pit) representing information with respect to an address signal or the like is formed on this light transmitting substrate. This irregularity can be obtained from copying the irregularity of a master block (stamper) by means of injection molding or projection molding of the resin materials such as polycarbonate resin or the like.

This irregularity information includes various information to reproduce and record the present optical recording medium more appropriately. These informations are capable of being recorded in advance in the case of copying the irregularity informations from the foregoing stamper upon forming the light transmitting substrate and forming plural pits having different depths or they are capable of being recorded by performing the multilevel-recording after the present optical recording medium is formed. As the foregoing various informations, there are an ID information for recognizing the present recording mediums individually, an optical recording medium type identification information for identifying that the present optical recording medium comprises an optical recording medium for a multilevel-recording, a information necessary for reproducing and recording such as an information or the like to determine the laser beam power for reproducing and recording the present optical recording medium, a time information of the contents recorded in multi levels, an address information representing the details of the contents and places of the information recorded in the present optical recording medium and a index information or the like. Therefore, it is possible to use these informations upon recording and/or reproducing the present optical recording medium. Further, in the case that the recording medium comprises a disk shape medium, the plural informations may be arranged according to a certain rule in the vicinity of the innermost periphery or the outermost periphery or on the disk.

The dye used for the recording layer 12 is an organic dye, such as cyanine, merocyanine, methine dyes and their derivatives, benzenethiol metallic complex, phtalocyanine dye, naphtalocyanine dye, azo dye, and so forth.

As a solvent for the coating solution of the organic dye, the following materials may be employed: ester class such as butyl acetate and Cellosolve acetate or the like, ketone class such as methyl ethyl ketone, cyclohexanone and methyl isobutyl ketone, chlorine hydrocarbon class such as dichlor methane, 1,2-dychlor ethane and chloroform or the like, amid such as dimethyl formamid or the like, hydrocarbon class such as cyclohexane or the like, ether class such as tetrahydrofuran, ethyl ether and dioxane or the like, alcohol class such as ethanol, n-propanol, iso propanol, n-butanol and diacetone alcohol, fluorine based solvent such as 2, 2, 3, 3-tetra fluoropropanol or the like and glycol ether class such as ethylene glycol monomethyl ether, ethylene glycol monoethyl ether and propylene glycol monoethyl ether or the like. These solvents may be used alone or in mixture in response to solubility of the organic dye to be used. Further, various additives such as singlet oxygen quencher, antioxidant, UV absorbent, elasticizer and lubricant or the like may be added to the coating solution according to the purposes.

The concentration of the organic dye coating solution to be prepared in this way may be typically 0.01 - 10 % by weight and preferably may be 0.1 - 5% by weight. As an application method, a spray method, a spin coating method, a dip method, a roll coating method, a blade coating method, a doctor roll method and a screen printing method or the like may be available. Among them, a spin coating method is preferable. Typically, the density of the organic dye coating solution is formed so that the thickness of the organic dye recording layer after drying is about 20 - 500 mm.

When an optical reflecting layer is provided on the foregoing organic dye recording layer, it is preferable that the optical reflective material as a material of the optical reflecting layer comprises a material having a high reflection coefficient to the laser beam light. As examples thereof, elements such as Au, Ag, Cu, Al, Ni, Pd, Pb, Pt, Cr, Ni, Pt or the like are cited. These elements are used solely or as an alloy and the optical reflecting layer is formed by a spattering method and a vacuum deposition method. The thickness of the optical reflecting layer is typically 10 - 800 nm and preferably, 50 - 300 nm.

Aprotection layer is provided on the optical reflecting layer to protect the organic dye recording layer and the optical reflecting layer or the like physically and chemically. Also, this protection layer may be provided on the side of the light transmitting substrate on which the organic dye recording layer is not provided, for the purpose of improving a scratch resistance and a moisture resistance. As a protection layer, a ultra-violet curing resin is typically widely used. The ultra-violet curing resin may be directly used or it is dissolved in an appropriate solvent so that the coating solution is adjusted and this coating solution is applied and the ultra-violet is radiated to cure the coating solution. Thus, the protection layer is formed. Further, various additives such as an anti-static additives, an antioxidant, a ultra-violet absorbent or the like may be added in response to the purposes. The thickness of the protection layer is about 0.1 - 100 µm.

The optical recording medium to be used in the present invention may be an optical recording medium of a single plate type with the above constitution. Also, two plates of the optical recording medium having the above constitution are opposed each other so that the protection layer is inside and they are bonded by using an adhesive or the like, so that the optical recording medium of stacking type can be obtained. Further, the optical recording medium having the foregoing constitution is used for at least one of two plates of the optical recording medium and the two plates of the optical recording medium are bonded, so that the optical recording medium of stacking type also can be obtained.

The recording method to record in the optical recording medium, which is obtained in this way, employs, for example, a semiconductor laser beam having a wave length within 770 - 790 nm or a wave length within 630 - 660 nm as a recording light. The recording method is carried out by altering the organic dye by radiating the laser beam suitable for the organic dye recording layer with rotating the optical recording medium at a fixed line rate or a fixed angular rate. A reproducing method is carried out by reading the difference between the amount of the reflection light in a portion in which the organic dye is altered and the amount of the reflection light in a portion in which the organic dye is not altered.

According to the present invention, an input signal to be changed by the data to be recorded is converted to a modulation signal with more than five stages by a modulation signal generator. Then, this modulation signal is transmitted to a modulator and the laser beam power is changed into more than five stages to radiate this laser beam to the present optical recording medium, so that the present optical recording medium records the information. Thus, the information more than five stages in the direction of the depth are multilevel-recorded in a recording portion with a predetermined length. Then, the amount of the reflected light obtained by the laser beam radiated upon reproducing is capable of being changed in more than five stages. In other words, with rotating the optical recording medium multilevel-recorded at a fixed line rate or a predetermined angular rate, a power less than the laser beam power upon recording, preferably, a laser beam less than 1mW is radiated. Then, detection of its reflected light allows the optical recording medium to be reproduced, so that the amount of the information per an unit length, further, the amount of the information per an unit area are extremely increased.

Further, the present optical recording medium has as many pits as having the depth with numbers in accordance with the number of stages of the laser beam power or multilevel-record is performed on a portion of the present recording medium in advance, so that the present recording medium can obtain the specific information such as the information for identifying the present recording mediums individually, the information for identifying the present optical recording medium as a optical recording mediums for a multilevel-recording and the information for determining the laser beam power to record and reproduce the present recording medium or the like in these plural pits and/or the multilevel-recorded portion. Reading this specific information upon recording and/or reproducing the present recording medium enables to reliably identify the present optical recording medium as a optical recording medium for a multilevel-recording, identify the optical recording mediums individually and determine the number of the laser beam power in response to the number of the pits recorded therein in advance. Then, the multilevel-recording and reproducing can be performed more reliably.

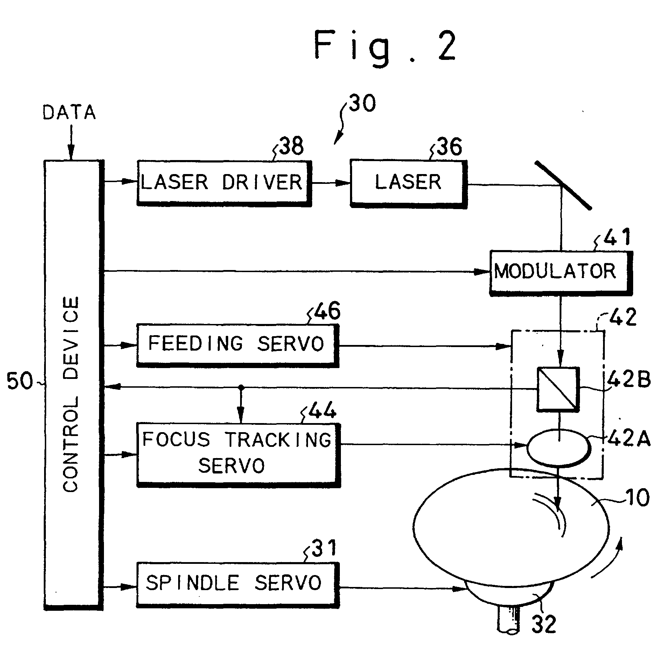

The multilevel recording onto the optical recording medium 10 is performed by an optical recording apparatus 30 shown in Fig. 2.

The optical recording apparatus 30 is a CD-R recorder. The optical recording apparatus 30 rotates the optical recording medium (disk) 10 in a condition of linear velocity being constant by a spindle motor 32 via a spindle servo 31, and records information on the recording layer 12 formed as described above of the optical recording medium (disk) 10 by a laser beam from a laser 36.

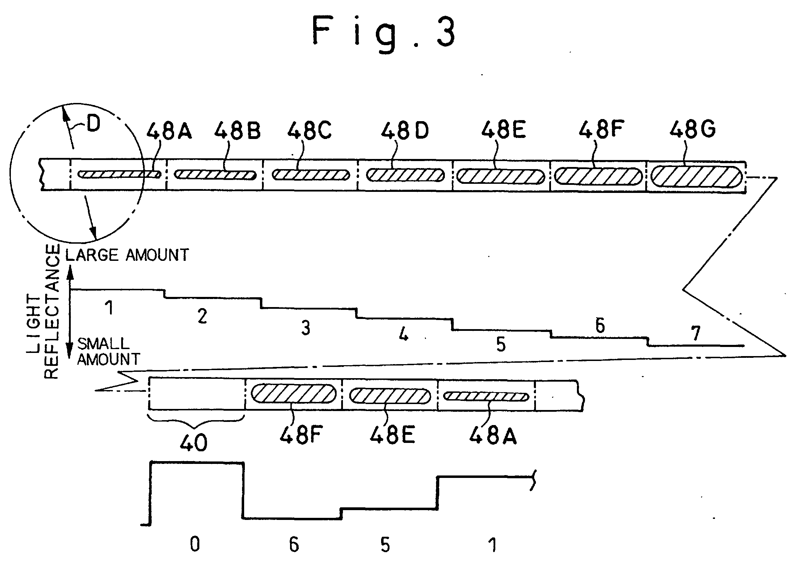

The laser 36 is driven by a laser driver 38 and irradiates the laser beam. A laser beam irradiating power of each of a virtual recording cell (describes below in detail) 40 shown in Figs. 1 and 3 is electrically controlled (modulated) by the laser driver 38 corresponding to the information to be recorded. A modulator 41 may be used for modulating amount of right-transmitting other than an electrically controlling means. As the modulator 41 of the irradiating power of the laser beam an acoustical optical modulator, an electrical optical modulator and so forth may be utilized. Further, a modulator being provided with two polarizers may be utilized. Each of the polarizers has different polarization direction each other and control amount of transmitting right according to superposing ratio between the two polarizers.

A reference numeral 42 shown in Fig. 2 denotes a recording optical system including an object lens 42A and a half mirror 42B. The object lens 42A is focusing and tracking controlled by focus tracking servo 44 so as to condense a laser beam onto the recording layer 12. The object lens 42A and the half mirror 42B are moved and controlled from an internal circumference to an outer circumferences synchronized with the rotation of the disk 10 in a predetermined velocity by a feeding servo 46.

The spindle servo 31, the laser driver 38, the focus tracking servo 44 and feeding servo 46 are controlled by a control device 50. The data (information) to be recorded on the recording layer 12 is inputted into the control device 50.

Next, the virtual recording cell 40 and a recorded mark recorded onto the virtual recording cell 40 will be described.

The virtual recording cell 40 is defined by a unit width along a radius direction of the recording medium and a unit length along a rotation direction. The unit width is narrower than a diameter of a beam waist of the laser beam, and is selected optionally depending on such as a track pitch and a groove width of the disk 10. The groove width is equal to a distance between a center of a land, between a groove and a groove, in the width direction and a center of an adjacent land in the width direction.

The virtual recording cell 40 of this embodiment, as shown in Fig.1, is defined a length (the length along the circumference direction) in the direction of the rotating, i.e., in the circumference direction, of the disk 10 shorter than the beam diameter (the diameter of the beam waist) D, and a width equal to the groove 16, and assumed continuously arranged in the circular direction in the groove 16. In the virtual recording cell 40, the recorded marks 48A - 48G schematically shown in Fig. 3 are formed depending on the information to be recorded by irradiating the laser beam on every virtual recording cell 40.

The beam diameter D of the laser beam emitted from the laser 36 at a position of the recording layer 12 is larger than the virtual recording cell 40. However, an optical transmissivity modulated region with different diameter, i. e., the recorded marks 48A - 48G, can be formed on the center of the laser beam depending on the laser irradiating power by selecting a material of the recording layer 12. The laser beam is approximately circular shaped. Since the laser beam is irradiated while rotating the optical recording medium 10, the laser beam is relatively moved in the virtual recording cell 40, therefore the recorded mark becomes an oval shape and the diameter of the recorded mark becomes large corresponding to the laser power.

This is because, the focused laser beam generally has a light. intensity of the Gaussian distribution and only at the portion where the irradiation energy of the laser beam is beyond the threshold the recording in the recording layer 12 is performed, the spot size of the laser beam capable of recording on the recording layer 12 is changed by changing the irradiating power of the laser beam. Thus, as shown in Fig. 3, seven stages of the recorded marks 48A-48G can be formed. However, the optical transmissivity inside each of recorded marks 48A- 48G is not uniform and generally becomes lower as it is closer to the center.

In this case, the size of the range where the irradiating energy is beyond the threshold value of the laser beam, i.e., the each size of the recorded marks 48A - 48G and the optical transmissivity is set so that optical reflectance of the reflected light of the whole of the recorded mark and unrecorded portion surrounding it in the virtual recording cell 40, has seven stages. The smaller the recorded mark is, the optical reflectance becomes larger. The highest optical reflectance is provided in the virtual recording cell where the recorded mark is not formed and the lowest optical reflectance is provided in the virtual recording cell where the largest recorded mark 48G is formed.

More specifically, the optical reflectance is set with considering the area ratio of each recorded mark 48A - 48G to the virtual recording cell 40, the optical transmissivity of the recorded mark itself.

The optical transmissivity of recorded marks 48A - 48G itself varies depending on the refractive index of the recording layer 12 altered by decomposition caused by irradiating laser beam and the changing amount in the thickness direction. If the optical transmissivity of the formed recorded mark portion is zero, it may not consider.

Next, the properties of the disk 10 will be described.

In the disk, the initial reflectance of the virtual recording cell 40 without irradiation of said laser beam is X % and the limited reflectance (minimum reflectance) with irradiation (for some long duration) of said laser beam is Y %, and therefore the reflectance changing range is (X - Y) % defined based on them.

In this case, the recording power (energy) required for lowering the reflectance of the virtual recording cell 40 by 20% of the reflectance changing range from the initial reflectance X % is the product of the irradiating power and the irradiating time, which is the area up to A (herein after refers to as an area A) as shown in Fig. 5. Further continuing the irradiation, the recording power required for lowering the reflectance by 80% of the reflectance changing range is the area up to B (herein after refers to as an area B).

The property of disk 10 is set so that the reflectance variation balance T = (B - A)/A defined with above values is:

$$1.8 < (B - A)/A < 11 \qquad \text{[Expression (2)].}$$

This property is achieved with suitably adjusting the thickness and the kind of material of a substrate 14, a recording layer 12, reflection layer 20, and so forth.

In the condition of setting thus, as already described, the virtual recording cell 40 can perform the multilevel recording by changing the irradiating power of the laser beam in five stages or more (e.g., seven stages in this example) while the irradiating time keeps constant. Especially, the data detection can be achieved accurately, even if the length of the recorded marks 48A - 48G of the multilevel recording is shorter than the diameter D of the condensed beam waist of the readout laser.

As a result, since the very small recorded mark smaller than the condensed beam waist can be generated varying reflectance in five stages or more, the optical recording medium capable of high density recording can be obtained.

In the above-described invention, it is preferable that the recording layer of the optical recording medium contains the organic dye constituent. As will be described in the examples below, in practically, the above-described multilevel recording is achieved by using the method for forming the recorded marks by reacting the organic dye constituent.

In this disk 10, the initial reflectance X of the virtual recording cell 40 is set 60 % or more, and the limited minimum reflectance Y is set 40 %or less. This is because in case that the recording layer has not the reflectance variation range to some degree, the recording layer is not suitable for the multilevel recording in five stages or more.

More preferably, the initial reflectance is set 65 % or more, and the limited minimum reflectance Y is set 35 % or less.

Further more, in the laser beam irradiating power in seven stages, the ratio of the maximum irradiating power EL (the value for forming recorded mark 48G) and the minimum irradiating power ES (the value for forming recorded mark 48A) is set to satisfy the expression:

$$0.05 < ES/EL < 0.5 \qquad \text{[Expression (3)]}.$$

As a result, the signal property on readout can be improved. Therefore, as shown in Fig. 3, the recorded mark can be smaller and the data can be read out sufficiently enough even if the recorded marks (all the recorded marks 48A - 48G) which have the length shorter than the diameter D of the condensed beam of the readout laser are formed.

In the present embodiment, all the recorded marks are smaller than the diameter D of the condensed beam, the present invention is not limited to this, this invention includes the case that only a part of the recorded marks is smaller than the diameter D or all the recordedmarks are larger than the diameter D of the condensed beam.

There is the case that the recorded mark cannot be read accurately only by forming the recorded mark by modulating the irradiating power of the laser beam on recording. However, in this optical recording method, since the ratio of the maximum recording power EL and the minimum recording power ES is in the range defined by the expression (3), the readout accuracy is remarkably improved.

For performing the multilevel recording in five stages or more, the irradiating power region (minimum irradiating power ES - maximum irradiating power EL) must be set to some degree. Since a kind of restriction that the ratio of the minimum irradiating power and maximum irradiating power to be set within the predetermined range is given, it is prevented that the irradiating power becomes too large or too small. Namely, the recording power is set (adjust) very rationally using the expression (3).

In the condition of setting thus, as already described, the virtual recording cell 40 can perform the multilevel recording by changing the irradiating power of the laser beam in five stages or more (e.g., seven stages in this example) while the irradiating time keeps constant. Especially, the data detection can be achieved accurately, even if the length of the recorded marks 48A - 48G of the multilevel recording is shorter than the diameter D of the condensed beam waist of the readout laser.

As a result, since the very small recorded mark smaller than the condensed beam waist can be generated varying reflectance in five stages or more, the optical recording medium capable of high density recording can be obtained.

In the above-described invention, it is preferable that the recording layer of the optical recording medium contains the organic dye constituent. As will be described in the examples below, in practically, the above-described multilevel recording is achieved by using the method for forming the recorded marks by reacting the organic dye constituent.

The optical recording method includes a meaning of selecting of the disk 10. This is because compatibility of the recording medium 10 and the recording method is required so as to satisfy the expression (3). Therefore, the disk 10 satisfying the expressions (3) and/or (2) is suitable for the multilevel recording.

Above described embodiment describes a disk of CD-R used as the optical recording medium 10, the present invention is not limited to this medium, the other optical recording medium including such as DVD-R can be applied in general.

Further, in the embodiment described above, the recording layer 12 consists of the organic dye such as cyanine. However, the present invention is not limited to such a material, whatever the recorded mark can be formed with varying size corresponding to the irradiating power of the laser beam in five stages or more.

When the organic dye as stated above is used, the recorded mark can be recorded with varying the size and optical transmissivity of the recorded mark corresponding to the irradiating power of the laser beam in five stages or more accurately.

Further the above-described embodiment is about the optical recording medium 10 which no information such as data is recorded, but the present invention is not limited to this, the optical recording medium on which information is recorded in multilevel in five stages or more can be applied.

Furthermore, the size of the virtual recording cell 40 set on the recording layer 12 when the recorded mark is formed by the light recording apparatus 30 is not limited to the embodiment. The desired length shorter than the diameter of the beam waist of the laser beam can be selected. In case that the optical recording medium has no groove 16, the size of the virtual recording cell 40 is set with desired size. In such a case the virtual recording cell 40 is preferably set equal to the approximate length of the recorded mark formed when the irradiating energy of maximum irradiating power of the laser beam is beyond threshold value which causes the change in recording layer 12.

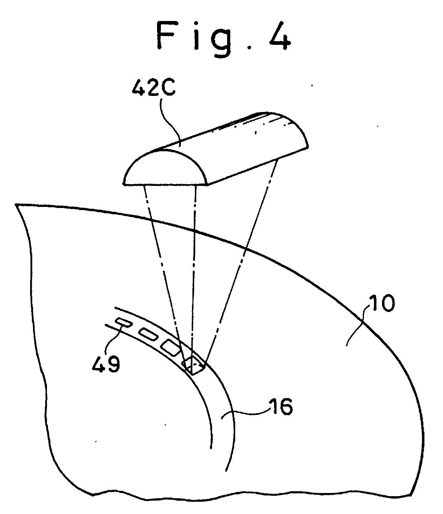

In the above description the laser beam has a circular shape on the recording layer 12. However, as shown in Fig. 4, the cylindrical lens 42C may be provided in addition to the object lens 42A. Then the size in the beam feeding direction on the recording medium 10 is short and the size in the direction of the orthogonal to the feeding direction is long thus so that the beam shape of oval or linear elongated in the tracking direction may be selected. In this case, since the recorded mark 49 is short, the length of the virtual recording cell can be further shortened and the recording density can be improved.

Moreover, this optical recording medium 10, as shown by the reference numeral 52 in Fig. 1, a plurality of pits having different reflectance corresponding to the number of stages of modulation may be provided previously, or the part of the optical recording medium may be performed multilevel recording previously. These pits 52 and/or the recorded marks 54 in multiple stages provides specific information such as the information which individually identifies the recording medium, the information which identifies the optical recording medium for multilevel recording, the information which determines the power of the laser beam for recording and reproducing the recording medium. When reproduction and/or recording of the optical recording medium is performed, the specific information is readout and thereby either the medium being an optical recording medium for multilevel recording can be identified certainly, or the optical recording medium can be identified individually, or the number of stages of the power of the laser beam can be determined corresponding to the previously recorded number of the stage of the pit. Therefore, the multilevel recording and reproduction can be performed more certainly. Alternatively, as represented by a reference numeral 56 in Fig. 1, providing a groove intermittent portion on the groove for guiding a laser beam, which forms the intermittent groove, can be obtain the similar effect. These methods can utilize individually or in combination.

[Examples]

Examples according to the present invention will be described hereinafter.

The under-mentioned examples 1 to 3 and a comparative example 1 are tested under the following specific condition.

In an experiment of the multilevel recording, a CD-R, which has the recording layer 12 consisting of dye, was used as a recording medium 10.

Recording was performed by the system that a high frequency signal generator and an acoustic optical modulator (AOM) was connected to a DDU (laser wave length; 784 nm), manufactured by Pulsetech Co., Ltd., which, is used for recording evaluation of a CD-R. An evaluation of the reproduction was performed by the system that a digital oscilloscope was connected to the DDU.

In multilevel recording, recording was performed while rotating the disk in a constant linear velocity at 4.8 m/sec, the clock frequency was 4 MHz, i.e., the feeding time of one virtual recording cell 40 was 0.25 $\mu$sec, the irradiating time of the laser beam was 0.2 $\mu$sec and the irradiating power of the laser beam was varied in six stages through AOM. The reproduction is performed while rotating the disk at a constant linear velocity, by irradiating the laser beam of 1 mW, the difference of the light amount of the reflected light for every virtual recording cell was detected.

In this case, a diameter of a recording laser beam is 1.6 $\mu$m on the recording layer. As for the size of the virtual recording cell 40, a width, the same as the groove, is 0.35 $\mu$m, and a length is 4.8m/4M = 1.2 $\mu$m, considering 4 million virtual recording cells in the groove of the length of 4.8 m.

[Example 1]

Preparing a coating solution for forming the organic dye recording layer by dissolving cyanine dye into fluorinated alcohol, coating the coating solution on a surface of the pre-groove side of a light transmitting substrate having a diameter of 120 mm and a thickness of 1.2 mm, made of polycarbonate resin (Teijin Kasei Co., Ltd., PANLITE AD5503), which a spiral pre-groove (track pitch: 1.6 $\mu$m, pre-groove width: 0.35 $\mu$m and pre-groove depth: 0.18 $\mu$m) is formed on a surface by an injection molding, while a rotation speed varies from 200 rpm to 5000 rpm by spin coating, an organic dye recording layer having a thickness approximately 200 nm from a bottom of the pre-groove was formed.

The light transmitting substrate, which an identification signal indicating that the optical recording medium is used for multilevel recording, and an information signal for the laser beam power are recorded previously, is used.

Next, the light reflecting layer of Ag is formed so that the thickness is approximately 100 nm, on the organic dye recording layer by spattering. Further, an ultraviolet curing resin (Dainippon Ink And Chemicals, Incorporated: SD318) is coated on the light reflecting layer, while a rotation speed varies from 300 rpm to 4000 rpm by spin coating. After coating, a protective layer having a thickness of 10 $\mu$m is formed by irradiating an ultraviolet from over a coated layer with a high voltage mercury lamp.

Using thus obtained optical recording medium, multilevel recording of the present invention is tried.

Recording is performed in six stages of the irradiating powers of the laser beam of respectively (1) 3.5 mW, (2) 5.6 mW, (3) 7.7 mW, (4) 9.8 mW, (5) 11.9 mW, and (6) 14 mW. On recording, recording is performed form each irradiating power over a round of the disk with a single irradiating time.

Recording in this way, a multilevel-recording at six stages was capable of being performed. Further, the discrimination signal for representing that this optical recording medium was used for a multilevel-recording and the information signal with regard to the laser beam power were capable of being detected and identified.

Further, the jitter value of the reproduced signal was measured by the "LeCroy digital oscilloscope LC-534EL", a good result could be obtained.

The jitter value depends on the shape of the recorded mark formed by irradiating of the laser beam on recording layer. The smaller jitter value means that the recorded mark is formed more certainly. This indicates that the information is recorded certainly, and therefore the reproduction can be also performed certainly.

In the measuring system of the jitter value used this time, considering the recording by the conventional binary record/reproduction method, if the jitter value of 10 % or less is measured it can be decided that good recording is performed.

[Example 2]

Except for using a phtalocyanine dye, the optical recording medium was made similar to Example 1, and using the thus obtained optical recording medium multilevel recording was tried in the same manner as that in Example 1. As a result, multilevel recording was performed. Moreover, identification signal indicating that the optical recording medium is used for multilevel recording, and the information signal for the laser beam power were detected and confirmed.

The similar measuring for the jitter values of the recorded signal was performed, and thereby the good result could be obtained.

[Example 3]

Except for using an azo dye, the optical recording medium was made similar to Example 1, and multilevel recording was tried using the thus obtained optical recording medium in the same manner as that in Example 1. As a result, multilevel recording was performed. Moreover, an identification signal indicating that the optical recording medium is used for multilevel recording, and an information signal for the laser beam power were detected and confirmed.

The similar measuring for the jitter values of the recorded signal was performed, and thereby the good result could be obtained.

[Comparative Example 1]

Using the CD-RW which is the phase changing medium as a recording medium, multilevel recording was tried in the same manner as that in Example 1. The maximum of the recording power was 14 mW.

Further, performing the similar measuring for the jitter values of the recorded signal, it is appreciated that the jitters are not good.

The resultants of above Examples 1 to 3 and Comparative Example 1 are shown in table 1.

[Table 1]

| Used dye and jitter values (%) of the recorded signal | | | | |
|---|---|---|---|---|
| Recorded layer | Example 1 cyanine based | Example 2 phthalocy anine based | Example 3 azo based | Comparative Example 1 Phase Changing layer |
| laser irradiating power (1) | 7.5 | 7.7 | 7.1 | 12.4 |
| laser irradiating power (2) | 7.3 | 7.8 | 7.4 | 12.0 |
| laser irradiating power (3) | 7.2 | 7.7 | 7.8 | 11.0 |
| laser irradiating power (4) | 7.0 | 7.6 | 8.2 | 12.1 |
| laser irradiating power (5) | 6.6 | 7.9 | 8.4 | 12.5 |

[Table 1]   (continued)

| Used dye and jitter values (%) of the recorded signal | | | | |
|---|---|---|---|---|
| Recorded layer | Example 1 cyanine based | Example 2 phthalocy anine based | Example 3 azo based | Comparative Example 1 Phase Changing layer |
| laser irradiating power (6) | 6.7 | 8.1 | 8.4 | 14.5 |

[Example 4]

An optical recording medium was prepared in the same manner as that in Example 1 and multilevel recording and reading-out were carried out under the same condition with in Example 1 except recording power of laser beam.

The recording was carried out with laser beam power in sixth stages of (1) 4.0 mW, (2) 4.5 mW, (3) 5.0 mW, (4) 5.4 mW, (5) 5.8 mW and (6) 6.2 mW. At this time, a recording linear velocity was set to 1.2 m/s, a recording signal was set to 700 kHz, and a duty ratio during the recording was set to 70%. The duty ratio represents a ratio of a time required for irradiating a laser beam to a unit recording time of a pit formed by recording. For example, in the case in which a pit having a depth of 10 is to be formed in a depth direction by outputting a recording signal having a length of 7, a duty ratio of 70 % is obtained. At this time, if the recording is carried out on the recording layer with a duty ratio of 100 %, the length of the pit is greater than 10.

Recording in this way, a multilevel-recording at six stages was capable of being performed. Further, the discrimination signal for representing that this optical recording medium was used for a multilevel-recording and the information signal with regard to the laser beam power were capable of being detected and identified.

Further, a jitter value of the recorded signal was measured by using an evaluating machine (TA320) manufactured by Yokogawa Electric Corporation. Thus, a good result was obtained.

In the evaluating machine system of the jitter value used for the Example 4 and next Examples 5, 6, considering the recording by the conventional binary record/reproduction method, if the jitter value of 35 % or less is measured it can be decided that good recording is performed.

[Example 5]

Except for using a phtalocyanine dye, the optical recording medium was made similar to Example 4, and using the thus obtained optical recording medium multilevel recording was tried in the same manner as that in Example 4. As a result, multilevel recording was performed. Moreover, identification signal indicating that the optical recording medium is used for multilevel recording, and the information signal for the laser beam power were detected and confirmed.

Further, a jitter value of the recorded signal was measured by using an evaluating machine (TA320) manufactured by Yokogawa Electric Corporation. Thus, a good result was obtained.

[Example 6]

Except for using an azo dye, the optical recording medium was made similar to Example 4, and multilevel recording was tried using the thus obtained optical recording medium in the same manner as that in Example 4. As a result, multilevel recording was performed. Moreover, an identification signal indicating that the optical recording medium is used for multilevel recording, and an information signal for the laser beam power were detected and confirmed.

Further, a jitter value of the recorded signal was measured by using an evaluating machine (TA320) manufactured by Yokogawa Electric Corporation. Thus, a good result was obtained.

The above resultants of the Examples 4 to 6 are shown in table 2.

[Table 2]

| Used dye and jitter value of the recorded signal | | | |
|---|---|---|---|
| | Example 4 | Example 5 | Example 6 |
| organic dye | cyanine based | Phthalo-cyanine based | azo based |
| laser beam power upon recording (1) | 32 | 30 | 30 |

[Table 2]   (continued)

| Used dye and jitter value of the recorded signal | | | |
|---|---|---|---|
| | Example 4 | Example 5 | Example 6 |
| organic dye | cyanine based | Phthalo-cyanine based | azo based |
| laser beam power upon recording (2) | 28 | 29 | 30 |
| laser beam power upon recording (3) | 26 | 28 | 29 |
| laser beam power upon recording (4) | 26 | 26 | 27 |
| laser beam power upon recording (5) | 24 | 26 | 25 |
| laser beam power upon recording (6) | 22 | 25 | 25 |

[Example 7]

A cyanine based dye having a light absorbing area in the vicinity of a laser beam wavelength of 770 to 790 nm was dissolved in fluorinated alcohol to prepare a coating solution for forming a 2 % recording layer. The coating solution was applied by spin coating at a rotating speed of 200 rpm to 5000 rpm on the surface at the pregroove side of a light transmitting substrate having a diameter 120 mm and a thickness of 1.2 mm which comprises polycarbonate (PANRITE AD5503 manufactured by Teijin Kasei Co., Ltd.) provided with a spiral pregroove (a track pitch of 1.6 μm, a pregroove width of 0.35 μm, a pregroove depth of 0.18 μm) formed on a surface by injection molding. Thus, an organic dye recording layer having a thickness of approximately 200 nm from the bottom portion of the pregroove was formed. A light transmitting substrate previously recording a discrimination signal indicating that the optical recording medium is utilized for multilevel recording and an information signal related to laser beam power was used herein.
Next, Ag was sputtered in a thickness of approximately 100 nm on the organic dye recording layer to form a light reflecting layer. Furthermore, the light reflecting layer was coated with an ultraviolet curing resin (SD318 manufactured by Dainippon Ink And Chemicals, Incorporated) by spin coating at a rotating speed of 300 rpm to 4000 rpm. After the coating, ultraviolet rays were irradiated from above the coated layer through a high-pressure mercury lamp so that a protective layer having a thickness of 10 μm was formed.
By using the optical recording medium thus obtained, multilevel recording was carried out. The multilevel recording was carried out by irradiating a laser beam on the optical recording medium rotated at a constant linear velocity while changing the power of the laser beam in six stages, and the reproduction was carried out by irradiating a laser beam at 1 mW during rotation at a constant linear velocity, thereby detecting reflected light thereof. As a recording and evaluating machine, DDU (a recording wavelength of 784 nm) manufactured by Pulsetech Co., Ltd. was used. The recording laser beam irradiation power for setting a change in the reflectance which is caused by the laser beam irradiation to be 20 %, 35 %, 50 %, 65 %, 80 % and 95 % of the maximum change range V is 4.1 mW, 4.4 mW, 4.9 mW, 5.3 mW, 5.7 mW and 6.2 mW, respectively. At this time, a recording linear velocity was set to 1.2 m/s, a recording signal was set to 700 kHz, and a duty ratio during the recording was set to 70 %.
As a result, the relationship between the laser beam irradiation power (A) and the laser beam irradiation power (B) was (B - A) / B = 0.28. A jitter value of the signal recorded at this time was measured by using an evaluating machine (TA320) manufactured by Yokogawa Electric Corporation.
The jitter value depends on the shape of the recording mark to be formed by radiating the laser beam to the organic dye recording layer. When the jitter value is smaller, the foregoing recording mark is reliably formed. This means that the information is capable of being reliably recorded, so that reliable reproduction is capable of being performed.
Considering recording by a conventional binary values recording and reproducing method, in the evaluation device of the jitter value used for the Examples 7, 8 (next) and Comparative Examples 3, 4 can be judged that a good recording is capable of being performed, if the jitter value is not more than 35%.

[Example 8]

A cyanine based dye having a light absorbing area in the vicinity of a laser beam wavelength of 630 to 650 nm was dissolved in fluorinated alcohol to prepare a coating solution for forming a 2 % recording layer. The coating solution was applied by spin coating at a rotating speed of 200 rpm to 5000 rpm on the surface at the pregroove side of a light transmitting substrate having a diameter 120 mm and a thickness of 0.6 mm which comprises polycarbonate (PANRITE AD5503 manufactured by Teijin Kasei Co., Ltd.) provided with a spiral pregroove (a track pitch of 0.8 μm, a pregroove width of 0.28 μm, a pregroove depth of 0.16 μm) formed on a surface by injection molding. Thus, an organic dye recording layer having a thickness of approximately 200 nm from the bottom portion of the pregroove was formed. A light transmitting substrate previously recording a discrimination signal indicating that the optical recording medium is utilized for multilevel recording and an information signal related to laser beam power was used herein.

Next, Ag was sputtered in a thickness of approximately 100 nm on the organic dye recording layer to form a light reflecting layer. Furthermore, the light reflecting layer was coated with an ultraviolet curing resin (SD318 manufactured by Dainippon Ink And Chemicals, Incorporated) by spin coating at a rotating speed of 300 rpm to 4000 rpm. After the coating, ultraviolet rays were irradiated from above the coated layer through a high-pressure mercury lamp so that a protective layer having a thickness of 10 μm was formed.

Furthermore, Al was sputtered in a thickness of approximately 100 nm on another light transmitting substrate having a thickness of 0.6 mm to form a light reflecting layer, and the light reflecting layer was coated with an ultraviolet curing resin (SD318 manufactured by Dainippon Ink And Chemicals, Incorporated) by spin coating at a rotating speed of 300 rpm to 4000 rpm. After the coating, ultraviolet rays were irradiated from above the coated layer through a high-pressure mercury lamp so that a protective layer having a thickness of 10 μm was formed. These were bonded with a cationic polymer based ultraviolet ray curing resin (Sony Chemical : SK7000) such that respective protective layers face each other.

By using the optical recording medium thus obtained, multilevel recording was carried out. The multilevel recording was carried out by irradiating a laser beam on the optical recording medium rotated at a constant linear velocity while changing the power of the laser beam in six stages, and the reproduction was carried out by irradiating a laser beam at 1 mW during rotation at a constant linear velocity, thereby detecting reflected light thereof. As a recording and evaluating machine, DDU (a recording wavelength of 636 nm) manufactured by Pulsetech Co., Ltd. was used. The recording laser beam irradiation power for setting a change in the reflectance which is caused by the laser beam irradiation to be 20 %, 35 %, 50 %, 65 %, 80 % and 95 % of the maximum change range V is 8.5 mW, 9.0 mW, 9.5 mW, 10.0 mW, 10.5 mW and 11.0 mW, respectively. At this time, a recording linear velocity was set to 3.5 m/s, a recording signal was set to 5 MHz, and a duty ratio during the recording was set to 50 %.

As a result, the relationship between the laser beam irradiation power (A) and the laser beam irradiation power (B) was (B - A) / B = 0.19. A jitter value of the signal recorded at this time was measured by using an evaluating machine (TA320) manufactured by Yokogawa Electric Corporation.

[Comparative Example 2]

An optical recording medium was fabricated in the same manner as that in Example 7 except that an azo based dye having a light absorbing area in the vicinity of a laser beam wavelength of 770 to 790 nm was used.

By using the optical recording medium thus obtained, multilevel recording was carried out. The multilevel recording was carried out by irradiating a laser beam on the optical recording medium rotated at a constant linear velocity while changing the power of the laser beam in six stages, and the reproduction was carried out by irradiating a laser beam at 1 mW during rotation at a constant linear velocity, thereby detecting reflected light thereof. As a recording and evaluating machine, DDU (a recording wavelength of 636 nm) manufactured by Pulsetech Co., Ltd. was used. The recording laser beam irradiation power for setting a change in the reflectance which is caused by the laser beam irradiation to be 20 %, 35 %, 50 %, 65 %, 80 % and 95 % of the maximum change range V is 5.0 mW, 5.2 mW, 5.4 mW, 5.6 mW, 5.8 mW and 6.0 mW, respectively. At this time, a recording linear velocity was set to 1.2 m/s, a recording signal was set to 700 kHz, and a duty ratio during the recording was set to 70 %.

As a result, the relationship between the laser beam irradiation power (A) and the laser beam irradiation power (B) was (B - A) / B = 0.13. A jitter value of the signal recorded at this time was measured by using an evaluating machine (TA320) manufactured by Yokogawa Electric Corporation.

[Comparative Example 3]

An optical recording medium was fabricated in the same manner as that in Example 8 except that an azo based dye having a light absorbing area in the vicinity of a laser beam wavelength of 630 to 650 nm was used.

By using the optical recording medium thus obtained, multilevel recording was carried out. The multilevel recording was carried out by irradiating a laser beam on the optical recording medium rotated at a constant linear velocity while changing the power of the laser beam in six stages, and the reproduction was carried out by irradiating a laser beam at 1 mW during rotation at a constant linear velocity, thereby detecting reflected light thereof. As a recording and evaluating machine, DDU (a recording wavelength of 636 nm) manufactured by Pulsetech Co., Ltd. was used. The recording laser beam irradiation power for setting a change in the reflectance which is caused by the laser beam irradiation to be 20 %, 35 %, 50 %, 65 %, 80 % and 95 % of the maximum change range V is 9.0 mW, 9.2 mW, 9.4 mW, 9.5 mW, 9.7 mW and 10.0 mW, respectively. At this time, a recording linear velocity was set to 3.5 m/s, a recording signal was set to 5 MHz, and a duty ratio during the recording was set to 50 %.

As a result, the relationship between the laser beam irradiation power (A) and the laser beam irradiation power (B) was (B - A) / B = 0.07. A jitter value of the signal recorded at this time was measured by using an evaluating machine (TA320) manufactured by Yokogawa Electric Corporation.

The above-mentioned results are shown in Table 3.

[Table 3]

| Value of equation (1) and jitter value(%) of recorded signal | | | | |
|---|---|---|---|---|
| | Example 7 | Example 8 | Comparative example 2 | Comparative example 3 |
| Value of equation (1) | 0.28 | 0.19 | 0.13 | 0.07 |
| Reflectance of 20% | 32 | 30 | 42 | 44 |
| Reflectance of 35% | 28 | 29 | 40 | 40 |
| Reflectance of 50% | 26 | 28 | 38 | 40 |
| Reflectance of 65% | 26 | 26 | 35 | 37 |
| Reflectance of 80% | 24 | 26 | 32 | 34 |
| Reflectance of 95% | 22 | 25 | 29 | 31 |

As is apparent from the result of the Table 3, when the laser beam irradiation power (A) and the laser beam irradiation power (B) have a relationship of (B - A) / B > 0.15, the jitter value of the recorded signal is in a good state. Consequently, it is possible to reliably read a signal in a recording portion during reproduction, and it is apparent that the recording signal can be reproduced better than that in the case in which the jitter value is deteriorated, that is, the recording is insufficiently carried out. By using such an optical recording medium, thus, the multilevel recording can be carried out well. The following examples 9 to 11 and comparative examples are tested under the following specific condition.

In an experiment of the multilevel recording, a CD-R, which has the recording layer 12 consisting of dye, was used as a recording medium 10.

Recording was performed by the system that a high frequency signal generator and a laser power modulator was connected to a DDU (laserwavelength; 784nm), manufactured by Pulsetech Co., Ltd., which is used for recording evaluation of a CD-R.

An evaluation of the reproduction was performed by the system that a digital oscilloscope was connected to the DDU.

In multilevel recording, recording was performed while rotating the disk in a constant linear velocity at 4.8 m/ sec, the clock frequency was 4 MHz, i.e., the feeding time of one virtual recording cell 40 was 0.25 μsec, the irradiating time of the laser beam was 0.2 μsec and the irradiating power of the laser beam within the same time duration was varied in six stages. The reproduction is performed while rotating the disk at a constant linear velocity, by irradiating the laser beam of 1 mW, the difference of the light amount of the reflected light for every virtual recording cell was detected.

In this case, a diameter of a recording laser beam is 1.6 μm on the recording layer. As for the size of the virtual recording cell 40, a width, the same as the groove, is 0.35 μm, and a length is 4.8m/4M = 1.2 μm, considering 4 million virtual recording cells in the groove of the length of 4.8 m.

Further, the jitter value of the reproduced signal was measured by the "LeCroy digital oscilloscope LC-534EL

In the measuring system of the jitter value used for the examples 9 to 11 and the comparative examples 5 to 8, considering the recording by the conventional binary record/reproduction method, if the jitter value of 10 % or less is measured it can be decided that good recording is performed.

[Example 9]

Preparing a coating solution for forming a 2 wt % organic dye recording layer by dissolving cyanine dye into fluorinated alcohol, coating the coating solution on a surface of the pre-groove side of a light transmitting substrate having a diameter of 120 mm and a thickness of 1.2 mm, made of polycarbonate resin (Teijin Kasei Co., Ltd., PANLITE AD5503), which a spiral pre-groove (track pitch: 1.6 μm, pre-groove width: 0.35 μm and pre-groove depth: 0.18 μm) is formed on a surface by an injection molding, while a rotation speed varies from 200 rpm to 5000 rpm by spin coating, an organic dye recording layer having a thickness approximately 200 nm from a bottom of the pre-groove was formed.

The light transmitting substrate, which an identification signal indicating that the optical recording medium is used for multilevel recording, and an information signal for the laser beam power are recorded previously, is used.

Next, the light reflecting layer of Ag is formed so that the thickness is approximately 100 nm, on the organic dye recording layer by spattering. Further, an ultraviolet curing resin (Dainippon Ink And Chemicals, Incorporated: SD318) is coated on the light reflecting layer, while a rotation speed varies from 300 rpm to 4000 rpm by spin coating. After coating, a protective layer having a thickness of 10 μm is formed by irradiating an ultraviolet from over a coated layer with a high voltage mercury lamp.

Using thus obtained optical recording medium, multilevel recording of the present invention is tried.

Recording is performed in six stages of the laser powers of respectively (1) 3.5 mW, (2) 5.6 mW, (3) 7.7 mW, (4) 9.8 mW, (5) 11.9 mW, and (6) 14 mW. On recording, recording is performed form each irradiating power over a round of the disk.

Where, the initial reflectance of the recording medium is 72 % (0.72) and the limited minimum reflectance of 20 % (0.20) was obtained, when the laser beam of 14 mW was irradiated for 250 sec or more. Therefore, the variation range of the reflectance was 0.52 (=0.72 - 0.20).

The irradiating power A required for lowering the reflectance of the recording medium by 20 % (approximately 0.1) of the variation range of the reflectance from the initial reflectance 0.72 was 3.5 mW and the irradiating power B required for lowering the reflectance of the recording medium by 80 % (approximately 0.42) of the variation range of the reflectance from the initial reflectance 0.72 was 14 mW. Therefore, the reflectance variation balance T was T = (B - A)/A = 2.

This optical recording medium achieved the multilevel recording in six stages, and the recorded data can be read out certainly. The jitter values of the recorded marks (1) - (6) in this medium are shown in the table. It is appreciated that the good evaluations of 10 % or below are obtained in all recorded mark.

[Example 10]

In Example 9 the cyanine was changed to a phtalocyanine and a coating solvent being changed to a methylcyclohexane, the dye solution was made. Except for those, the optical recording medium was made in the same manner as that in Example 1.

The recording linear velocity was 4.8m/sec and the irradiating powers of the laser beam are respectively (1) 4.3 mW, (2) 6.1 mW, (3) 7.8 mW, (4) 9.5 mW, (5) 11.3 mW, and (6) 13 mW. Recording is performed over a round of the disk with each single signal.

Where, the initial reflectance of the recording medium is 68 % (0.68) and the limited minimum reflectance of 22 % (0.22) was obtained, when the laser beam was irradiated for 250 nsec or more. Therefore, the variation range of the reflectance was 0.46 (=0.68 - 0.22).

The recording power A required for lowering the reflectance of the recording medium by 20 % (approximately 0.092) of the variation range of the reflectance from the initial reflectance 0.68 was 4.3 mW and the recording power B required for lowering the reflectance of the recording medium by 80 % (approximately 0.37) of the variation range of the reflectance from the initial reflectance 0.68 was 13 mW. Therefore, the reflectance variation balance was T = (B - A)/A = 2.

This optical recording medium achieved the multilevel recording in six stages, and the recorded data can be read out certainly. The jitter values of the recorded marks (1) - (6) in this medium are shown in the table. It is appreciated that the good evaluations of 10 % or below are obtained in all recorded mark.

[Example 11]

The dye solution in Example 9 was change to a mixture of the cyanine and an a zo metallic complex, and except for that, the optical recording medium was made in the same manner as that in Example 9. The combination ratio of the cyanine and an azo metallic complex was 50 : 50 wt%.

The recording linear velocity was 4.8 m/sec and the laser powers are respectively (1) 1.4 mW, (2) 3.9 mW, (3) 6.4 mW, (4) 9.0 mW, (5) 11.5 mW, and (6) 14 mW. Recording is performed over a round of the disk with each single signal.

Where, the initial reflectance of the recording medium is 70 % (0.70) and the limited minimum reflectance of 21 % (0.21) was obtained, when the laser beam of 14mW was irradiated for 250 nsec or more. Therefore, the variation range of the reflectance was 0.49 (=0.70 - 0.21).

The recording power A required for lowering the reflectance of the recording medium by 20 % (approximately 0.10) of the variation range of the reflectance from the initial reflectance 0.70 was 1.4 mW and the recording power B required for lowering the reflectance of the recording medium by 80 % (approximately 0.39) of the variation range of the reflectance from the initial reflectance 0.70 was 14 mW. Therefore, the reflectance variation balance was T = (B - A)/A = 9.

This optical recording medium also achieved the multilevel recording in six stages, and the recorded data can be read out certainly. The jitter values of the recorded marks (1) - (6) in this medium are shown in the table. It is appreciated that the good evaluations of 10 % or below are obtained in all recorded mark.

[Comparative Example 5]

The optical recording medium was made using the dye solution in the same manner as that in Example 10. Then the thickness of the dye layer was changed to 250 nmby adjusting the rotation speed of spin coating, and the reflection layer was changed to gold.

The recording linear velocity was 4.8 m/sec and the irradiating powers of the laser beam are respectively (1) 4.4 mW, (2) 6.1 mW, (3) 8.8 mW, (4) 9.5 mW, (5) 11.2 mW, and (6) 13 mW. Recording is performed over a round of the disk with each single signal.

Where, the initial reflectance of the recording medium is 70 % (0.70) and the limited minimum reflectance of 20 % (0.20) was obtained, when the laser beam of 13mW was irradiated for 250 nsec or more. Therefore, the variation range of the reflectance was 0.50 (=0.70 - 0.20).

The recording power A required for lowering the reflectance of the recording medium by 20 % (approximately 0.10) of the variation range of the reflectance from the initial reflectance 0.70 was 4.4 mW and the recording power B required for lowering the reflectance of the recording medium by 80 % (approximately 0.40) of the variation range of the reflectance from the initial reflectance 0.70 was 13 mW. Therefore, the reflectance variation balance was T = (B - A)/A = 1.8.

From this optical recording medium, six stages of the recorded data cannot be read out certainly. The jitter values of the recorded marks (1) - (6) in this medium are shown in the table. It is appreciated that the no good evaluations of 10 % or more are obtained in all recorded marks.

[Comparative Example 6]

The combination ratio of the dye solution in the example 5 was changed and the optical recording medium was made. Specifically, the combination ratio of the cyanine and an azo metallic complex was 30 : 70 wt%.

The recording linear velocity was 4.8 m/sec and the laser powers are respectively (1) 1.3 mW, (2) 4.0 mW, (3) 6.7 mW, (4) 9.5 mW, (5) 12.2 mW, and (6) 15 mW. Recording is performed over a round of the disk with each single signal.

Where, the initial reflectance of the recording medium is 70 % (0.70) and the limited minimum reflectance of 20 % (0.20) was obtained, when the laser beam of 15 mW was irradiated for 250 nsec or more. Therefore, the variation range of the reflectance was 0.50 (=0.70 - 0.20).

The recording power A required for lowering the reflectance of the recording medium by 20 % (approximately 0.10) of the variation range of the reflectance from the initial reflectance 0.70 was 1.3 mW and the recording power B required for lowering the reflectance of the recording medium by 80 % (approximately 0.40) of the variation range of the reflectance from the initial reflectance 0.70 was 15 mW. Therefore, the reflectance variation balance was T = (B - A)/A = 11.

From this optical recording medium , the recorded data (4) and (5) could be read in some probability and the other recorded data cannot be read out certainly. The jitter values of the recorded marks (1) - (6) in this medium are shown in the table. It is appreciated that the no good evaluations of 10 % or more are obtained in a part of recorded marks.

[Comparative Example 7]

The optical recording medium was made in the completely same manner as that in Example 9.

The recording linear velocity was 4.8 m/sec and the laser powers are respectively (1) 1.1 mW, (2) 3.6 mW, (3) 7.4 mW, (4) 10.6 mW, (5) 13.8 mW, and (6) 17 mW.

Where, the initial reflectance of the recording medium is 72 % (0.72) and the limited minimum reflectance of 20 % (0.20) was obtained, when the laser beam of 17 mW was irradiated for 200 nsec or more. Therefore, the variation range of the reflectance was 0.52 (=0.72 - 0.20).

The recording power A required for lowering the reflectance of the recording mediumby 20 % (approximately 0.10) of the variation range of the reflectance from the initial reflectance 0.72 was 1.1 mW and the recording power B required for lowering the reflectance of the recording medium by 80 % (approximately 0.42) of the variation range of the reflectance from the initial reflectance 0.70 was 17 mW. Therefore, the reflectance variation balance was T = (B - A)/A = 15.

From this optical recording medium, all the recorded data cannot be read out certainly. The jitter values of the recorded marks (1) - (6) in this medium are shown in the table below. It is appreciated that the evaluations of 10 % or more are obtained in all recorded marks and the value was further worsened than Comparative Example 2 (T = 11).

[Comparative Example 8]

The optical recording medium was made in the same manner as that in Example 9.

The recording linear velocity was 4.8 m/sec and the laser powers are respectively (1) 4.4 mW, (2) 5.7 mW, (3) 7.0 mW, (4) 8.4 mW, (5) 9.7 mW, and (6) 11 mW.

Where, the initial reflectance of the recording medium is 72 % (0.72) and the limited minimum reflectance of 20 % (0.20) was obtained, when the laser beam of 11 mW was irradiated for 300 nsec or more. Therefore, the variation range of the reflectance was 0.52 (=0.72 - 0.20).

The recording power A required for lowering the reflectance of the recording medium by 20 % (approximately 0.10) of the variation range of the reflectance from the initial reflectance 0.72 was 4.4 mW and the recording power B required for lowering the reflectance of the recording medium by 80 % (approximately 0.42) of the variation range of the reflectance from the initial reflectance 0.70 was 11 mW. Therefore, the reflectance variation balance was T = (B - A)/A = 1.5.

From this optical recording medium, the all recorded data cannot be read out certainly. The jitter values of the recorded marks (1) - (6) in this medium are shown in the table below. It is appreciated that the evaluations of 10 % or more are obtained in all recorded marks and the value was further worsened than Comparative Example 1 (T = 1.8).

The resultant of examples 9 - 11, and comparative examples 5 - 8 as hereinbefore described is shown in a table 4.

[Table 4]

| Value of reflectance variation balance T and a jitter value (%) of the recorded signal | | | | | | | |
|---|---|---|---|---|---|---|---|
| | Example 9 | Example 10 | Example 11 | Comparative example 5 | Comparative example 6 | Comparative example 7 | Comparative example 8 |
| Reflectance variation balance | 3.0 | 2.0 | 9.0 | 1.8 | 11.0 | 15.0 | 1.5 |
| laser irradiating power (1) | 5.1 | 6.8 | 7.2 | 11.5 | 10.9 | 13.2 | 12.8 |
| laser irradiating power (2) | 5.0 | 6.5 | 6.8 | 11.0 | 10.8 | 13.1 | 12.6 |
| laser irradiating power (3) | 5.0 | 6.3 | 6.9 | 10.8 | 10.5 | 12.8 | 12.3 |
| laser irradiating power (4) | 5.3 | 6.3 | 7.0 | 10.5 | 9.9 | 12.5 | 12.1 |
| laser irradiating power (5) | 5.5 | 6.3 | 7.4 | 10.8 | 9.8 | 12.6 | 12.5 |
| laser beam power upon recording (6) | 5.5 | 6.5 | 7.5 | 10.9 | 10.5 | 13.0 | 12.5 |

[Example 12]

Preparing a coating solution for forming a 2 wt % organic dye recording layer by dissolving cyanine dye into fluorinated alcohol, coating the coating solution on a surface of the pre-groove side of a light transmitting substrate having a diameter of 120 mm and a thickness of 1.2 mm, made of polycarbonate resin (Teijin Kasei Co., Ltd., PANLITE AD5503), which a spiral pre-groove (track pitch: 1.6 μm, pre-groove width: 0.35 μm and pre-groove depth: 0.18 μm) is formed on a surface by an injection molding, while a rotation speed varies from 200 rpm to 5000 rpm by spin coating, an organic dye recording layer having a thickness approximately 200 nm from a bottom of the pre-groove was formed.
The light transmitting substrate, which an identification signal indicating that the optical recording medium is used for multilevel recording, and an information signal for the laser beam power are recorded previously, is used.
Next, the light reflecting layer of Ag is formed so that the thickness is approximately 100 nm, on the organic dye recording layer by spattering. Further, an ultraviolet curing resin (Dainippon Ink And Chemicals, Incorporated: SD318) is coated on the light reflecting layer, while a rotation speed varies from 300 rpm to 4000 rpm by spin coating. After coating, a protective layer having a thickness of 10 μm is formed by irradiating an ultraviolet from over a coated layer with a high voltage mercury lamp.
Using thus obtained optical recording medium, multilevel recording of the present invention is tried.
By using the optical recording medium thus obtained, multilevel recording was carried out. The multilevel recording was carried out by irradiating a laser beam on the optical recording medium rotated at a constant linear velocity while changing the power of the laser beam in six stages, and the reproduction was carried out by irradiating a laser beam at 1 mW during rotation at a constant linear velocity, thereby detecting reflected light thereof. As a recording and evaluating machine, DDU (a recording wavelength of 784 nm) manufactured by Pulsetech Co., Ltd. was used. The recording was carried out with laser beam power in sixth stages of (1) 4.0 mW, (2) 4.5 mW, (3) 5.0 mW, (4) 5.4 mW, (5) 5.8 mW and (6) 6.2 mW. At this time, a recording linear velocity was set to 1.2 m/s, a recording signal was set to 700 kHz, and a duty ratio during the recording was set to (1) 80.0 %, (2) 76.4 %, (3) 72.7 %, (4) 69.8 %, (5) 66.9 % and (6) 64.0 %.
Thus, the recording was carried out and a jitter value of the recorded signal was measured by using an evaluating machine (TA320) manufactured by Yokogawa Electric Corporation. Consequently, a small fluctuation was caused by a difference in the irradiating power of the laser beam during the recording. Thus, a good result was obtained. At this time, the laser beam has a relationship (T) of 0.8 between the duty ratio of maximum recording power and that of minimum recording power.

[Example 13]

An optical recording medium was prepared in the same manner as that in Example 12 and multilevel recording was carried out. The multilevel recording was carried out by irradiating a laser beam on the optical recording medium rotated at a constant linear velocity while changing the quantity of the laser beam in six stages, and the reproduction was carried out by irradiating a laser beam at 1 mW during rotation at a constant linear velocity, thereby detecting reflected light thereof. As a recording and evaluating machine, DDU (a recording wavelength of 784 nm) manufactured by Pulsetech Co., Ltd. was used. The recording was carried out with the laser beam power in sixth stages of (1) 4.0 mW, (2) 4.5 mW, (3) 5.0 mW, (4) 5.4 mW, (5) 5.8 mW and (6) 6.2 mW. At this time, a recording linear velocity was set to 1.2 m/s, a recording signal was set to 700 kHz, and a duty ratio during the recording was set to (1) 90.0 %, (2) 81.8 %, (3) 73.6 %, (4) 67.1 %, (5) 60.5 % and (6) 54.0 %.
Thus, the recording was carried out and a jitter value of the recorded signal was measured by using an evaluating machine (TA320) manufactured by Yokogawa Electric Corporation. Consequently, a small fluctuation was caused by a difference in the irradiating power of the laser beam during the recording. Thus, a good result was obtained. At this time, the laser beam has a relationship (T) of 0.6 between the duty ratio of maximum recording power and that of minimum recording power.

[Comparative Example 9]

An optical recording medium was prepared in the same manner as that in Example 12 and multilevel recording was carried out. The multilevel recording was carried out by irradiating a laser beam on the optical recording medium rotated at a constant linear velocity while changing the quantity of the laser beam in six stages, and the reproduction was carried out by irradiating a laser beam at 1 mW during rotation at a constant linear velocity, thereby detecting reflected light thereof. As a recording and evaluating machine, DDU (a recording wavelength of 784 nm) manufactured by Pulsetech Co., Ltd. was used. The recording was carried out with laser beam irradiating power in sixth stages of (1) 4.0 mW, (2) 4.5 mW, (3) 5.0 mW, (4) 5.4 mW, (5) 5.8 mW and (6) 6.2 mW. At this time, a recording linear velocity was set to 1.2m/s, a recording signal was set to 700 kHz, and a duty ratio during the recording was uniformly set to 70.0 %.

Thus, the recording was carried out and a jitter value of the recorded signal was measured by using an evaluating machine (TA320) manufactured by Yokogawa Electric Corporation. Consequently, a great fluctuation was caused by a difference in the laser beam power during the recording and the jitter value was deteriorated with great laser beam irradiating power during the recording. At this time, the laser beam has a relationship (T) of 1.0 between the duty ratio of maximum irradiating power and that of minimum irradiating power.

[Comparative Example 10]

An optical recording medium was prepared in the same manner as that in Example 12 and multilevel recording was carried out. The multilevel recording was carried out by irradiating a laser beam on the optical recording medium rotated at a constant linear velocity while changing the quantity of the laser beam in six stages, and the reproduction was carried out by irradiating a laser beam at 1 mW during rotation at a constant linear velocity, thereby detecting reflected light thereof. As a recording and evaluating machine, DDU (a recording wavelength of 784 nm) manufactured by Pulsetech Co., Ltd. was used. The recording was carried out with laser beam irradiating power in sixth stages of (1) 4.0 mW, (2) 4.5 mW, (3) 5.0 mW, (4) 5.4 mW, (5) 5.8 mW and (6) 6.2 mW. At this time, a recording linear velocity was set to 1.2 m/s, a recording signal was set to 700 kHz, and a duty ratio during the recording was set to (1) 100.0 %, (2) 86.4 %, (3) 72.7 %, (4) 61.8 %, (5) 50.9 % and (6) 40.0 %.

Thus, the recording was carried out and a jitter value of the recorded signal was measured by using an evaluating machine (TA320) manufactured by Yokogawa Electric Corporation. Consequently, a great fluctuation was caused by a difference in the laser beam irradiating power during the recording and the j itter value was deteriorated with great laser beam irradiating power during the recording. At this time, the laser beam has a relationship (T) of 0.4 between the duty ratio of maximum irradiating power and that of minimum irradiating power.

The above-mentioned results of examples 12, 13 and comparative example 9, 10 are shown in Table 5.

[Table 5]

| Value of T and a jitter value of the recorded signal | | | | |
|---|---|---|---|---|
| | Example 12 | Example 13 | Comparative example 9 | Comparative example 10 |
| T: ($P_1/P_2$) | 0.8 | 0.6 | 1.0 | 0.4 |
| laser beam irradiating power upon recording (1) | 24 | 23 | 41 | 43 |
| laser beam irradiating power upon recording (2) | 25 | 23 | 39 | 40 |
| laser beam irradiating power upon recording (3) | 25 | 24 | 37 | 37 |
| laser beam irradiating power upon recording (4) | 23 | 24 | 35 | 36 |
| laser beam irradiating power upon recording (5) | 22 | 23 | 32 | 33 |
| laser beam irradiating power upon recording (6) | 22 | 21 | 31 | 30 |
| $P_1$: Duty ratio of maximum irradiating power in the laser beam | | | | |
| $P_2$: Duty ratio of minimum irradiating power in the laser beam | | | | |

Next, example 14 - 16 and comparative examples 11 - 13 tested of the multilevel recording will be described hereinafter. ACD-R, which has the recording layer 12 consisting of dye, was used as a recording medium.

Recording was performed by the system that a high frequency signal generator and an acoustic optical modulator was connected to a DDU, manufactured by Pulsetech Co., Ltd., which is used for recording evaluation of a CD-R. An evaluation of the reproduction was performed by the system that a digital oscilloscope was connected to the DDU.

In multilevel recording, recording was performed while rotating the disk in a constant linear velocity at 4.8 m/sec, the clock frequency was 4 MHz, the irradiating power of the laser beam was varied in six stages. The reproduction is performed while rotating the disk at a constant linear velocity, by irradiating the laser beam of 1 mW, the difference of the light amount of the reflected light for every virtual recording cell was detected.

In this case, a diameter of a recording laser beam is 1.6 μm on the recording layer. As for the size of the virtual recording cell 40, a width, the same as the groove, is 0.35 μm, and a length is 4.8m/4M = 1.2 μm, considering 4 million virtual recording cells in the groove of the length of 4.8 m.

Further, the jitter value of the reproduced signal was measured by the "LeCroy digital oscilloscope LC-534EL". The jitter value depends on the shape of the recorded mark formed by irradiating of the laser beam on recording layer. The smaller jitter value means that the recorded mark is formed more certainly. This indicates that the information is recorded certainly, and therefore the reproduction can be also performed certainly.

In the measuring system of the jitter value used for examples 14 - 16 and comparative examples 11 - 13, considering the recording by the conventional binary record/reproduction method, if the jitter value of 10 % or less is measured it can be decided that good recording is performed.

Examples 14 - 16 and comparative examples 11 - 13 will be described concretely as below:

[Example 14]

Preparing a coating solution for forming the organic dye recording layer by dissolving cyanine dye into fluorinated alcohol, coating the coating solution on a surface of the pre-groove side of a light transmitting substrate having a diameter of 120 mm and a thickness of 1.2 mm, made of polycarbonate resin (Teijin Kasei Co., Ltd., PANLITE AD5503), which a spiral pre-groove (track pitch: 1.6 μm, pre-groove width: 0.35 μm and pre-groove depth: 0.18 μm) is formed on a surface by an injection molding, while a rotation speed varies from 200 rpm to 5000 rpm by spin coating, an organic dye recording layer having a thickness approximately 200 nm from a bottom of the pre-groove was formed.

The light transmitting substrate, which an identification signal indicating that the optical recording medium is used for multilevel recording, and an information signal for the laser beam power are recorded previously, is used.

Next, the light reflecting layer of Ag is formed so that the thickness is approximately 100 nm, on the organic dye recording layer by spattering. Further, an ultraviolet curing resin (Dainippon Ink And Chemicals, Incorporated: SD318) is coated on the light reflecting layer, while a rotation speed varies from 300 rpm to 4000 rpm by spin coating. After coating, a protective layer having a thickness of 10 μm is formed by irradiating an ultraviolet from over a coated layer with a high voltage mercury lamp.

Using thus obtained optical recording medium, multilevel recording of the present invention is tried.

Irradiating time on one virtual recording cell t (=200nsec) × (the laser power) . Recording is performed in six stages of the Irradiating power of the laser beam of respectively (1) 3.5 mW, (2) 5.6 mW, (3) 7.7 mW, (4) 9.8 mW, (5) 11.9 mW, and (6) 14 mW. On recording, recording is performed form each irradiating power over a round of the disk with a single irradiating time.

The minimum recording power ES was (1) 3.5mW and the maximum recording power EL was (6) 14mW. Thus, the ratio (ES/EL) was 0.250, which satisfied the expression (1). This disk achieved the multilevel recording in six stages, and the recorded data can be read out certainly. The jitter values of the recorded marks (1) - (6) in this medium are shown in the table. It is appreciated that the good evaluations of 10 % or below are obtained in all recorded mark.

[Example 15]

The optical recording medium was made in the same manner as that in Example 13.

The recording linear velocity was 4.8 m/sec, the clock frequency of recording was 4 MHz, the irradiating powers of the laser beam are respectively (1) 5.8 mW, (2) 7.3 mW, (3) 8.7 mW, (4) 10.1 mW, (5) 11.5 mW, and (6) 13 mW. Recording is performed over a round of the disk with each single signal.

The minimum irradiating power ES was (1) 5.8mW and the maximum irradiating power EL was (6) 13 mW. Thus, the ratio (ES/EL) was 0.446, which satisfied the expression (1). This disk achieved the multilevel recording in six stages, and the recorded data can be read out certainly. The jitter values of the recorded marks (1) - (6) in this medium are shown in the table. It is appreciated that the good evaluations of 10 % or below are obtained in all recorded mark.

[Example 16]

The optical recording medium was made in the same manner as that in Example 14.

The recording linear velocity was 4.8 m/sec, the clock frequency of recording was 4 MHz, and the irradiating powers of the laser beam are respectively (1) 1 mW, (2) 4 mW, (3) 6.6 mW, (4) 9.4 mW, (5) 12.2 mW, and (6) 15 mW. Recording is performed over a round of the disk with each single signal.

The minimum irradiating power ES was (1) 1 mW and the maximum irradiating power EL was (6) 15 mW. Thus, the ratio (ES/EL) was 0.066, which satisfied the expression (1). This disk achieved the multilevel recording in six stages, and the recorded data can be read out certainly. The jitter values of the recorded marks (1) - (6) in this medium are shown in the table. It is appreciated that the good evaluations of 10 % or below are obtained in all recorded mark.

[Comparative Example 11]

The optical recording medium was made in the same manner as that in Example 11.

The recording linear velocity was 4.8 m/sec, the clock frequency of recording was 4 MHz, and the irradiating powers of the laser beam are respectively (1) 0.6 mW, (2) 4.1 mW, (3) 7.0 mW, (4) 10.6 mW, (5) 14.0 mW, and (6) 17 mW. Recording is performed over a round of the disk with each single signal.

The minimum irradiating power ES was (1) 0.6 mW and the maximum irradiating power EL was (6) 17 mW. Thus, the ratio (ES/EL) was 0.035, which did not satisfy the expression (1). From this disk, the recorded data cannot be read out certainly. The jitter values of the recorded marks (1) - (6) in this medium are shown in the table below. It is appreciated that the jitter values of 10 % or more are obtained in all the recorded marks and the sufficient evaluation is not obtained.

[Comparative Example 12]

The optical recording medium was made in the same manner as that in Example 14.

The recording linear velocity was 4.8 m/sec, the clock frequency of recording was 4 MHz, and the irradiating powers of the laser beam are respectively (1) 6.5 mW, (2) 7.6 mW, (3) 8.7 mW, (4) 9.8mW, (5) 10.9mW, and (6) 12mW. Recording is performed over a round of the disk with each single signal.

The minimum irradiating power ES was (1) 6.5 mW and the maximum irradiating power EL was (6) 12 mW. Thus, the ratio (ES/EL) was 0.542, which did not satisfy the expression (1). From this disk, the recorded data in multilevel recording in six stages cannot be read out certainly. The jitter values of the recorded marks (1) - (6) in this medium are shown in the table below. It is appreciated that the jitter values of 10 % or more are obtained in the most of recorded marks and the sufficient evaluation is not obtained.

[Comparative Example 13]

A CD-RW was used as the recording medium, and multilevel recording was performed.

In this CD-RW medium, a phase change layer is formed including Ag-In-Sb-Te instead of the organic dye as the recording layer, and data is recorded by the physical transition between crystalline substance (crystal), and non-crystalline substance (amorphous) of the phase change layer.

The recording linear velocity was 4.8 m/sec, the clock frequency of recording was 4 MHz, and the irradiating powers of the laser beam are respectively (1) 8.5 mW, (2) 9.2 mW, (3) 9.9 mW, (4) 10.6mW, (5) 11.3mW, and (6) 12mW. Recording is performed over a round of the disk with each single signal.

The minimum irradiating power ES was (1) 8.5 mW and the maximum irradiating power EL was (6) 12 mW. Thus, the ratio (ES/EL) was 0.708, which did not satisfy the expression (1). From this CD-RW, the recorded data in multilevel recording in six stages cannot be read out certainly. The jitter values of the recorded marks (1) - (6) in this medium are shown in the table below. It is appreciated that the jitter values of 10 % or more are obtained in all the recorded marks and the value was further worsened than Comparative Example 12 (ES/EL = 0.542).

[Table 6]

| Value of ES/EL and a jitter value (%) of the recorded signal | | | | | | |
|---|---|---|---|---|---|---|
| | Example 14 | Example 15 | Example 16 | Corporative Example 11 | Corporative Example 12 | Corporative Example 13 |
| ES/EL | 0.25 | 0.444 | 0.063 | 0.034 | 0.545 | 0.707 |
| Laser beam irradiating power (1) | 5.5 | 7.1 | 8.3 | 11.5 | 11.5 | 13.1 |
| Laser beam irradiating power (2) | 5.4 | 7.2 | 8.4 | 11.0 | 10.5 | 12.5 |

[Table 6]   (continued)

| Value of ES/EL and a jitter value (%) of the recorded signal | | | | | | |
|---|---|---|---|---|---|---|
| | Example 14 | Example 15 | Example 16 | Corporative Example 11 | Corporative Example 12 | Corporative Example 13 |
| Laser beam irradiating power (3) | 5.3 | 7.1 | 8.1 | 10.5 | 10.2 | 12.3 |
| Laser beam irradiating power (4) | 5.3 | 7.1 | 8.8 | 10.6 | 9.9 | 12.5 |
| Laser beam irradiating power (5) | 5.3 | 8.4 | 9.1 | 11.2 | 10.6 | 12.9 |
| Laser beam irradiating power (6) | 5.2 | 8.5 | 9.2 | 11.1 | 10.8 | 13.0 |
| ES (sec): Minimum irradiating power of laser beam | | | | | | |
| EL (sec): Maximum irradiating power of laser beam | | | | | | |

INDUSTRIAL APPLICABILITY

In the optical recording and reading method, by changing the laser beam power into more than five stages and radiating the laser beam to the optical recording medium having the organic dye recording layer, the date to be recorded can be multilevel-recorded. Further, forming several kinds of pit rows having different depths in advance, or performing the multilevel-record in advance, the specified information in the portion is identified so that it can be found that the optical recording medium comprises the present optical recording medium and the information with regard to the amount of the laser beam for recording and reproducing the present optical recording medium is capable of being read upon reproducing the present optical recording medium.

Further, in the optical recording method, by changing the laser beam power into more than five stages and radiating the laser beam to the optical recording medium having the recording layer, the date to be recorded can be multilevel-recorded in five or more stages in a depth direction of the recording layer's reflectivity variation.

**Claims**

1.    An optical recording medium having an organic dye recording layer, wherein the data to be recorded in multilevel recorded by changing a laser beam power into more than five stages and radiating the laser beam to the optical recording medium.

2.    An optical recording medium having an organic dye recording layer, wherein the optical recording medium is multilevel-recorded in a depth direction of the organic dye recording layer.

3.    An optical recording medium according to claim 2, the optical recording medium has plural pits having different depths in advance.

4.    An optical recording medium according to claim 2 or 3, the optical recording medium has plural pits having the depth with numbers in accordance with the number of stages of a laser beam radiating power.

5.    An optical recording medium capable of recording information by irradiating a recording layer with a laser beam and forming recorded marks thereon and of reading out the recorded information by irradiating the recorded marks with a readout laser beam, **characterized in that** said recording layer has virtual recording cells defined an optionally selective unit length in a relative moving direction of said laser beam and said recording layer, and a unit width orthogonal to said moving direction, and continuously set along said moving direction, said recording layer of said cells being capable of forming said recorded marks which have differences each other in at least one of a size and an optical transmissivity corresponding to modulation of five stages or more of an irradiating power of said laser beam, and thereby said optical recording medium can be achieved a recording of the information in a multilevel format of five stages or more by modulating an optical reflectance of the whole of said virtual recording cells based on at least one of an area ratio of said recorded marks to said virtual recording cells and the optical transmissivity of said recorded marks.

6.  An optical recording medium according to claim 5, wherein said unit length of said virtual recording cell is set to be approximately equal to a length of said recorded mark formed by irradiating of said laser beam with a maximum irradiating power.

7.  An optical recording medium according to claim 5 or 6, wherein a groove for guiding said laser beam is provided along said recording layer, said virtual recording cells being mainly set in said groove, and said unit width being equal to a distance between center positions in a width direction of each of a land sandwiched by the adjacent grooves and an adjacent land.

8.  An optical recording medium according to any one of claims 5 to 7, wherein said unit length of said virtual recording cell is equal to a diameter or less of a beam waist of said readout laser beam.

9.  An optical recording medium according to any one of claims 5 to 8, wherein said medium has previously recorded information in a multilevel manner on a portion of said recording layer.

10. An optical recording medium according to claim 3, 4 or 9, wherein the plural pits and/or a multilevel-recorded portion have or has a specific information and the specific information represents that the optical recording medium is medium for a multilevel-recording.

11. An optical recording medium according to anyone of claims 5 to 8, wherein said medium has recorded specific information which indicates the medium being a multilevel recording medium on at least one of said virtual recording cell and the multilevel recorded portion.

12. An optical recording medium according to anyone of claims 1 to 11, wherein a groove for guiding said laser beam is provided along said recording layer and intermitted on its way.

13. An optical recording medium according to anyone of claims 1 to 12, wherein that said recording layer is formed with an organic dye.

14. An optical recording medium medium having a recording layer on a light transmitting substrate, wherein the recording layer formed of an organic dye and capable of forming recorded marks in which when multilevel recording is to be carried out by irradiation of a laser beam through switching of irradiating power of the laser beam in five stages or more depending on data to be recorded, a relationship ($T = P_1/P_2$) between a duty ratio ($P_1$) of maximum irradiating power and a duty ratio ($P_2$) of minimum irradiating power in the laser beam satisfies an equation $0.5 < T < 0.9$.

15. An optical recording medium according to claim 5, wherein the recording layer of said virtual recording cells is capable of forming said recorded marks which have differences each other corresponding to an irradiating power of said laser beam under a condition that satisfies, $0.05 < ES/EL < 0.5$, a ratio of a maximum irradiating power EL and a minimum irradiating power ES of a power which is a product of said irradiating power of five stages or more in a unit irradiating time for the virtual recording cells.

16. An optical recording medium according to claim 5, wherein the virtual recording cell is set to have a property of

$$1.8 < (B-A)/A < 11$$

where irradiating power of the laser beam, which is a product of irradiating power required for changing a 20 % of a whole changing range as 100 % of a reflectance changing range being X/100-Y/100 defined with an initial reflectance X % of said virtual recording cell without irradiation of said laser beam and a limited minimum reflectance Y % with irradiation of said laser beam, from said initial reflectance X % by irradiating of said laser beam is A, and irradiating power of the laser beam, which is a product of irradiating power required for changing a 80 % of said reflectance changing range being X/100-Y/100 with irradiation of said laser beam, from said initial reflectance X % by irradiating of said laser beam is B, and thereby said optical recording medium can be achieved a recording of the information in a multilevel format of five stages or more by modulating an optical reflectance of the whole of said virtual recording cells based on at least one of an area ratio of said recorded marks to said virtual recording cells and the optical transmissivity of said recorded marks.

17. An optical recording medium according to claim 16, wherein said medium has a plurality of recorded marks of different sizes formed by a multilevel recording with changing said irradiating power of said laser beam for five stages or more, and includes a recorded mark has a length of the diameter or less of a condensed beam waist of said readout laser in at least a part of said recorded marks.

18. An optical recording medium according to claim 16, wherein said recording layer of said medium includes an organic dye.

19. An optical recording medium according to claim 16, wherein said virtual recording cell has 60 % or more of said initial reflectance before recording, and 40 % or less of said limited minimum reflectance after recording.

20. An optical recording method for recording information by irradiating a recording layer with a laser beam while moving one of the recording layer and the laser beam relative to another in a fixed direction and forming recorded marks on said recording layer, whereinby comprising the steps of assuming virtual recording cells on said recording layer continuously along said moving direction, changing sizes of said recorded marks formed in said virtual recording cells by way of modulating an irradiating power of said laser beam in five stages or more on each of said virtual recording cells, and modulating an optical reflectance of the whole of said virtual recording cells based on at least one of an area ratio of said recorded marks to said virtual recording cells and the optical transmissivity of said recorded marks corresponding to an irradiating power of said laser beam, so as to record the information in a multilevel format of five stages or more.

21. An optical recording method according to claim 20, wherein said recording layer is of a material that at least one of a size and an optical transmissivity is modulated only by an irradiating power when a beam diameter of said laser beam is constant, and irradiated with said laser beam with a constant diameter of said laser beam.

22. An optical reading-out method, wherein the data to be recorded is multilevel recorded by changing a laser beam power into more than five stages and radiating the laser beam to an optical recording medium having an organic dye recording layer with plural pits having different depths in advance, at least one of the plural pits and a multilevel-recorded portion of the optical recording medium have or has a specific information and being capable to read-out the specific information upon at least one of reading-out and recording the present optical recording medium.

23. An optical recording-out method according to claim 22, wherein the plural pits have the depth with numbers in accordance with the number of stages of a laser beam irradiating power.

24. An optical reading-out method according to claim 22, identifying the present recording mediums individually or identifying the present recording medium as an optical recording medium for a multilevel-recording by the specific information.

25. An optical reading-out method, wherein plural pits having different depths are formed on an optical recording medium having an organic dye recording layer and/or a multilevel-recording is performed on the optical recording medium having an organic dye recording layer in advance and the number of the laser beam power is determined in response to the number of the pits recorded therein in advance.

26. An optical recording method in which when multilevel recording is to be carried out by irradiation of a laser beam on an optical recording medium having a recording layer on a light transmitting substrate through switching of irradiating power of the laser beam in five stages ormore depending on data to be recorded, a relationship ($T = P_1/P_2$) between a duty ratio ($P_1$) of maximum irradiating power and a duty ratio ($P_2$) of minimum irradiating power in the laser beam satisfies an equation $0.5 < T < 0.9$.

27. An optical recording method in which when multilevel recording is to be carried out by irradiating of a laser beam on an optical recording medium having a recording layer on a light transmitting substrate through switching of irradiating power of the laser beam in five stages or more depending on data to be recorded, a relationship between laser beam irradiation power (A) having a change in a reflectance of 0.2 X V and laser beam irradiating power (B) having a change in a reflectance of 0.8 X V satisfies an equation, (B - A) / B > 0.15, and a maximum change range of the reflectance based on the laser beam irradiating in a recording portion is represented by V.

28. An optical recording method according to claim 20, wherein further comprising the steps of modulating an irradiating power of said laser beam in five stages or more in a unit irradiating time for each of said virtual recording cells and irradiating said laser beam under a condition that satisfies, 0.05 < ES/EL < 0.5, a ratio of a maximum irradiating power EL and a minimum irradiating power ES, and forming recorded marks modulated an optical reflectance of the whole of said virtual recording cells in at least one of sizes and the optical transmissivity of said recorded marks corresponding to an irradiating power of said laser beam.

29. An optical recording method according to claim 28, wherein said plurality of recorded marks of different sizes formed by irradiating said laser beam includes a recorded mark has a length of the diameter or less of a condensed beam of a readout laser in said recorded marks.

# Fig.1

EP 1 235 210 A1

Fig. 2

EP 1 235 210 A1

# Fig.3

D

48A  48B  48C  48D  48E  48F  48G

LIGHT REFLECTANCE

LARGE AMOUNT

1  2  3  4  5  6  7

SMALL AMOUNT

40  48F  48E  48A

0  6  5  1

Fig.4

# Fig. 5

EP 1 235 210 A1

**EP 1 235 210 A1**

<table>
<tr><td colspan="2" align="center">INTERNATIONAL SEARCH REPORT</td><td>International application No.<br>PCT/JP00/07093</td></tr>
</table>

**A. CLASSIFICATION OF SUBJECT MATTER**
Int.Cl⁷ G11B7/0045, G11B7/005, G11B7/125, G11B7/24

According to International Patent Classification (IPC) or to both national classification and IPC

**B. FIELDS SEARCHED**

Minimum documentation searched (classification system followed by classification symbols)
Int.Cl⁷ G11B7/00-7/013, G11B7/125, G11B7/24

Documentation searched other than minimum documentation to the extent that such documents are included in the fields searched
Jitsuyo Shinan Koho          1922-1996          Toroku Jitsuyo Shinan Koho 1994-2000
Kokai Jitsuyo Shinan Koho 1971-2000          Jitsuyo Shinan Toroku Koho 1996-2000

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO, 8911147, A1 (EASTMAN KODAK CO),<br>16 November, 1989 (16.11.89),<br>Full text<br>& EP, 372051, A  & JP, 2-504196, T | 1-4, 13-14, 27<br>5-7, 9-11,<br>15-16, 20-24 |
| Y | US, 5796692, A (CANON KK),<br>18 August, 1998 (18.08.98),<br>Full text<br>& JP, 3-228227, A | 5, 15-19, 20-24 |
| X | JP, 8-77599, A (Pioneer Video Corporation),<br>22 March, 1996 (22.03.96),<br>Full text  (Family: none) | 1-4 |
| X | JP, 5-205276, A (Sony Corporation),<br>13 August, 1993 (13.08.93),<br>Full text  (Family: none) | 1-4 |
| X | US, 5508990, A (OLYMPUS OPTICAL CO),<br>16 April, 1996 (16.04.96),<br>Full text<br>& DE, 4119384, T  & JP, 4-44642, A | 1-4 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>09 January, 2001 (09.01.01) | Date of mailing of the international search report<br>23 January, 2001 (23.01.01) |
|---|---|
| Name and mailing address of the ISA/<br>Japanese Patent Office | Authorized officer |
| Facsimile No. | Telephone No. |

Form PCT/ISA/210 (second sheet) (July 1992)

36

INTERNATIONAL SEARCH REPORT

International application No.

PCT/JP00/07093

| C (Continuation). DOCUMENTS CONSIDERED TO BE RELEVANT | | |
|---|---|---|
| Category* | Citation of document, with indication, where appropriate, of the relevant passages | Relevant to claim No. |
| X | JP, 2-278535, A (Canon Inc.),<br>14 November, 1990 (14.11.90),<br>Full text (Family: none) | 1-4, 14, 26, 27 |
| Y | JP, 10-27396, A (Hitachi Maxell, Ltd.),<br>27 January, 1998 (27.01.98),<br>Full text (Family: none) | 9-11,24 |

Form PCT/ISA/210 (continuation of second sheet) (July 1992)

## INTERNATIONAL SEARCH REPORT

| International application No. |
| --- |
| PCT/JP00/07093 |

**Box I    Observations where certain claims were found unsearchable (Continuation of item 1 of first sheet)**

This international search report has not been established in respect of certain claims under Article 17(2)(a) for the following reasons:

1. ☐  Claims Nos.:
   because they relate to subject matter not required to be searched by this Authority, namely:

2. ☐  Claims Nos.:
   because they relate to parts of the international application that do not comply with the prescribed requirements to such an extent that no meaningful international search can be carried out, specifically:

3. ☐  Claims Nos.:
   because they are dependent claims and are not drafted in accordance with the second and third sentences of Rule 6.4(a).

**Box II    Observations where unity of invention is lacking (Continuation of item 2 of first sheet)**

This International Searching Authority found multiple inventions in this international application, as follows:

      The inventions of claims 1, 5-24, 26-29 relate to an optical recording medium and optical recording method for applying a laser beam to an optical recording medium with power varied in five or more steps and thereby recording data to be recorded in multilevel.
      The inventions of claims 2-4 relate to an optical recording medium having an organic dye recording layer, the medium characterized in that data is recorded in multilevel in the direction of the depth of the organic dye recording layer.
      The invention of claim 25 relates to an optical storage medium reproducing method for reproducing data from an optical recorded medium having an organic dye recording layer where data is recorded in the form of pits having different depths and/or by multilevel recording, in which the power of the read laser beam is varied in steps the number of which is so determined as to agree with the number of depths of the pits or the number of levels of the multilevel recording.

1. ☒  As all required additional search fees were timely paid by the applicant, this international search report covers all searchable claims.

2. ☐  As all searchable claims could be searched without effort justifying an additional fee, this Authority did not invite payment of any additional fee.

3. ☐  As only some of the required additional search fees were timely paid by the applicant, this international search report covers only those claims for which fees were paid, specifically claims Nos.:

4. ☐  No required additional search fees were timely paid by the applicant. Consequently, this international search report is restricted to the invention first mentioned in the claims; it is covered by claims Nos.:

**Remark on Protest**  ☐  The additional search fees were accompanied by the applicant's protest.

                       ☐  No protest accompanied the payment of additional search fees.

Form PCT/ISA/210 (continuation of first sheet (1)) (July 1992)